(19) Europäisches Patentamt
European Patent Office
Office européen des brevets

(11) Veröffentlichungsnummer: **0 169 813 B1**

# (12) EUROPÄISCHE PATENTSCHRIFT

(45) Veröffentlichungstag der Patentschrift: **15.04.92**

(51) Int. Cl.⁵: **G03C 7/29**, C09B 29/036, //C09B29/039

(21) Anmeldenummer: **85810334.4**

(22) Anmeldetag: **22.07.85**

## (54) Photographisches Aufzeichnungsmaterial für das Silberfarbbleichverfahren.

(30) Priorität: **27.07.84 CH 3659/84**

(43) Veröffentlichungstag der Anmeldung:
**29.01.86 Patentblatt 86/05**

(45) Bekanntmachung des Hinweises auf die Patenterteilung:
**15.04.92 Patentblatt 92/16**

(84) Benannte Vertragsstaaten:
**BE CH DE FR GB IT LI NL**

(56) Entgegenhaltungen:
**EP-A- 0 040 171**
**BE-A- 771 036**
**FR-A- 2 266 729**
**GB-A- 2 060 672**

(73) Patentinhaber: **CIBA-GEIGY AG**
**Klybeckstrasse 141**
**CH-4002 Basel(CH)**

(72) Erfinder: **Tschopp, Paul**
**Peterstrasse 1**
**CH-3186 Düdingen(CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

**Beschreibung**

Die vorliegende Erfindung betrifft ein photographisches Aufzeichnungsmaterial für das Silberfarbbleichverfahren.

Die Verwendung von wasserlöslichen Polyazo- oder Azoxyfarbstoffen für das Silberfarbbleichverfahren ist z.B. auf A. Meyer, J. Phot. Sci. 13, (1965), 90, und Research Disclosure 17643/VII A, Dezember 1978, bekannt. Die Verwendung solcher Azofarbstoffe bietet zunächst insofern Vorteile, als dass eine leichte und homogene Anfärbung der hydrophilen, kolloidalen Bindemittel einer photographischen Schicht, insbesondere Gelatine, möglich ist. Bei der Verarbeitung belichteter Silberfarbbleichmaterialien entstehen ferner an den Belichtungsstellen wasserlösliche Spaltprodukte der Azofarbstoffe, die leicht auswaschbar sind. Von den Nachteilen, die jedoch bei Verwendung wasserlöslicher Azofarbstoffe auftreten, ist besonders die Tendenz dieser Farbstoffe zur Diffusion in und zwischen photographischen Schichten zu erwähnen. Zur Ueberwindung dieses Nachteils wurde bereits die Verwendung von Reaktivfarbstoffen vorgeschlagen. Dies bringt aber eine zu starke Beeinflussung der rheologischen, chemischen und mechanischen Eigenschaften der herzustellenden photographischen Schicht mit sich. Auch der Einsatz höhermolekularer wasserlöslicher Azofarbstoffe bringt kein vollständig zufriedenstellendes Ergebnis. Die Diffusionsfestigkeit wird zwar dadurch erhöht, doch haben diese Farbstoffe die Neigung Assoziate zu bilden, wobei die spektralen Eigenschaften, wie Absorptionsmaximum und Maximaldichte, verändert werden.

In CH-A-600 385 wurde weiterhin vorgeschlagen, wasserunlösliche (öllösliche, d.h. in hochsiedenden organischen Lösungsmitteln lösliche) Azofarbstoffe in Silberfarbbleichmaterialien zu verwenden. Diese Farbstoffe bleichen jedoch nur sehr langsam und unvollständig. Ausserdem bedarf es zur Erzeugung des gewünschten Bildfarbstoffes einer speziellen Behandlung des photographischen Materials in einem stark alkalischen Medium. Andere wasserunlösliche Azofarbstoffe, die in Silberfarbbleichmaterialien eingearbeitet wurden, vgl. z.B. US-A-3 544 326 und Reserarch Disclosure 14983, September 1976, sind nur schwer zugänglich und zeigen eine zu geringe Stabilität gegen pH-Wertänderungen und Lichteinwirkung.

Desweiteren beschreibt die EP-A- 0040 171 photographisches Silberfarbbleichmaterial enthaltend öllösliche Azofarbstoffe welche durch Phosphorsäurediester-Gruppen substituiert sind.

Aufgabe der vorliegenden Erfindung ist es daher, neue und verbesserte, öllösliche Azofarbstoffe enthaltende photographische Aufzeichnungsmaterialien für das Silberfarbbleichverfahren bereitzustellen.

Es wurden nun öllösliche Azofarbstoffe für die Verwendung in photographischen Silberfarbbleichmaterialien gefunden, die dem Aufzeichnungsmaterial weitgehend die gewünschten Eigenschaften verleihen und photographische Bilder hoher Qualität liefern.

Gegenstand der vorliegenden Erfindung ist daher ein photographisches Aufzeichnungsmaterial für das Silberfarbbleichverfahren, das in mindestens einer Silberhalogenidemulsionsschicht oder in einer an diese Schicht(en) angrenzenden Kolloidschicht mindestens einen öllöslichen Azofarbstoff der Formel

(1) 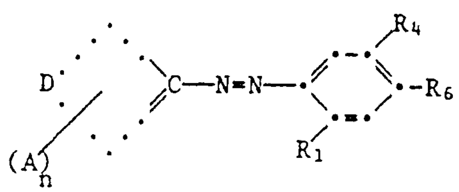

enthält, worin

D die zur Vervollständigung eines mindestens 1 Stickstoffatom enthaltenden 5-gliedrigen, gegebenenfalls benzanellierten Ringes notwendigen Atome darstellt,

A Wasserstoff, Alkyl mit 1 bis 12 Kohlenstoffatomen, mit Alkoxy, Phenoxy, Acyl, Acyloxy, Carbalkoxy, Cyano oder Halogen substituiertes Alkyl mit 1 bis 4 Kohlenstoffatomen, Alkoxy mit 1 bis 4 Kohlenstoffatomen, Phenyl, mit einer elektronegativen Gruppe substituiertes Phenyl, Alkylthio mit 1 bis 4 Kohlenstoffatomen, mit Phenyl substituiertes Alkylthio mit 1 bis 4 Kohlenstoffatomen, Cyano, Nitro oder Halogen, n 0, 1, 2 oder 3,

$R_1$ Wasserstoff, Alkyl mit 1 bis 4 Kohlenstoffatomen, Hydroxyl, $-NHCOL_1$ worin $L_1$ Alkyl mit 1 bis 20 Kohlenstoffatomen oder substituiertes Carbonamido ist,

$R_6$ Wasserstoff oder $-NR_2R_3$, worin $R_2$ und $R_3$ unabhängig voneinander Wasserstoff, Alkyl mit 1 bis 8 Kohlenstoffatomen oder mit Acylamino, Phenyl, Alkoxy oder Hydroxyl substituiertes Alkyl mit 1 bis 4 Kohlenstoffatomen sind, und

$R_4$ Wasserstoff, Alkoxy mit 1 bis 4 Kohlenstofatomen oder

$$-(OCH_2CH_2)_m\!-\!OCH_3$$

ist, worin m 1 oder 2 ist.

Gegenstand der vorliegenden Erfindung sind ferner solche Farbstoffe der Formel (1), worin D die Atome zur Vervollständigung eines Benzpyrazolrests bedeutet.

In den Azofarbstoffen der Formel (1) stellt D die zur Vervollständigung eines mindestens 1 Stickstoffatom enthaltenden 5-gliedrigen, gegebenenfalls benzanellierten Ringes notwendigen Atome dar. Dieser Ring kann weitere Heteroatome enthalten, wie z.B. Stickstoff- und Schwefelatome. Geeignete heterocyclische Reste sind somit z.B. Pyrazolyl-, Imidazolyl-, Triazolyl-, Thiazolyl-, Thiadiazolyl- und Isothiadiazolylreste sowie deren benzanellierte Derivate.

Diese Reste können sowohl unsubstituiert als auch substituiert in den Farbstoffen der Formel (1) vorliegen. Als Substituent (A) eignen sich beispielsweise Alkyl mit 1 bis 12 Kohlenstoffatomen wie Methyl, Aethyl, Propyl, Butyl, Pentyl, Hexyl, Heptyl, Octyl, Nonyl, Decyl, Undecyl und Dodecyl sowie die entsprechenden verzweigten Isomeren. Bevorzugte Alkylreste sind Methyl, Aethyl, Propyl, i-Propyl, Butyl, Decyl, Undecyl und Dodecyl. Insbesondere die Alkylreste mit 1 bis 4 Kohlenstoffatomen können substituiert sein. Geeignete Alkylsubstituenten sind z.B. Alkoxy, vorzugsweise mit 1 bis 4 Kohlenstoffatomen wie Aethoxy, Phenoxy, Acyl, wie z.B. Acetyl oder Benzoyl, Acyloxy, wie z.B. Pivaloyloxy, Carbalkoxy, vorzugsweise mit 2 bis 8 Kohlenstoffatomen wie $-CO_2C_2H_5$ und $-CO_2CH_2C_6H_5$, Cyano oder Halogen, insbesondere Chlor.

Weitere Substituenten A an den heterocyclischen Ringen D sind Alkoxy mit 1 bis 4 Kohlenstoffatomen, vorzugsweise Aethoxy, ferner Phenyl, das mit einer elektronegativen Gruppe wie z.B. Nitro substituiert sein kann, Alkylthio mit 1 bis 4 Kohlenstoffatomen, insbesondere Methylthio, phenylsubstituiertes Alkylthio mit 1 bis 4 Kohlenstoffatomen im Alkylteil, wie Benzylthio, Cyano, Nitro oder Halogen, vorzugsweise Chlor.

Die heterocyclischen Ringe D können bis zu 3 Substituenten A enthalten, n ist also 0, 1, 2 oder 3.

Der Substituent $R_1$ an der Kupplungskomponente bedeutet neben Wasserstoff und Hydroxyl Alkyl mit 1 bis 4 Kohlenstoffatomen, wobei Methyl bevorzugt ist. Ferner bedeutet $R_1$ Reste der Formel $-NHCOL_1$. $L_1$ bedeutet Alkyl mit 1 bis 20 Kohlenstoffatomen oder substituiertes Carbonamido (-CON(Substituent)$_2$). Als Alkylreste $L_1$ kommen die für A aufgezählten Reste in Frage, des weiteren noch z.B. n-Tridecyl, n-Heptadecyl, n-Octadecyl und n-Eicosyl sowie entsprechende verzweigte Reste. Für die Carbonamidogruppe geeignete Substituenten sind insbesondere Methyl und Phenyl.

Der Substituent $R_6$ bedeutet Wasserstoff oder gegebenenfalls substituiertes Amino der Formel $-NR_2R_3$. Darin bedeuten $R_2$ und $R_3$ unabhängig voneinander Wasserstoff oder Alkyl mit 1 bis 8 Kohlenstoffatomen wie z.B. Methyl, Aethyl, Propyl, i-Propyl, Butyl, Hexyl und Octyl. Insbesondere die Alkylreste mit 1 bis 4 Kohlenstoffatomen können substituiert sein. Als Substituenten sind beispielsweise Phenyl, Hydroxyl, Alkoxy, vorzugsweise mit 1 bis 4 Kohlenstoffatomen, wie z.B. Methyl und Butyl, sowie Acylamino der Formel $-NHCOL_3$, worin $L_3$ Alkyl mit vorzugsweise 4 bis 12 Kohlenstoffatomen, insbesondere t-Butyl, Heptyl, Octyl, Nonyl, Decyl, Undecyl oder Dodecyl ist, zu nennen.

$R_4$ bedeutet neben Wasserstoff Alkoxy mit 1 bis 4 Kohlenstoffatomen, vorzugsweise Methoxy, oder einen Alkoxyalkoxyrest der Formel

$$-(OCH_2CH_2)_m\!-\!OCH_3,$$

worin m 1 oder vorzugsweise 2 ist.

Bevorzugte Farbstoffe der Formel (1) sind solche, worin der durch D gebildete Ring ein 1-Phenyl-3-methyl-pyrazolylrest ist. Besonders bevorzugt sind solche 1-Phenyl-3-methyl-pyrazolazofarbstoffe, in deren Kupplungskomponente

$R_1$ Wasserstoff oder Alkyl mit 1 bis 4 Kohlenstoffatomen und $R_6$ $-NR_2R_3$ ist, worin $R_2$ und $R_3$ unabhängig voneinander Alkyl mit 1 bis 4 Kohlenstoffatomen oder $(CH_2)_pNHCOL_3$ sind, $L_3$ Alkyl mit 4 bis 12 Kohlenstoffatome, p 1, 2, 3 oder 4, und $R_4$ Wasserstoff ist.

In einer weiteren Gruppe geeigneter Farbstoffe der Formel (1) ergänzt D einen Benzpyrazolyl- oder 1-Methylbenzpyrazolylrest. Solche Farbstoffe sind insbesondere dann geeignet, wenn in der Kupplungskomponente $R_1$ Wasserstoff oder $-NHCOL_1$ ist, worin $L_1$ Alkyl mit 6 bis 12 Kohlenstoffatomen ist, $R_6$ $-NR_2R_3$ ist, worin $R_2$ und $R_3$ unabhängig voneinander Alkyl mit 1 bis 4 Kohlenstoffatomen oder mit Phenyl substituiertes Alkyl mit 1 bis 4 Kohlenstoffatomen sind, und $R_4$ Wasserstoff ist.

Farbstoffe, in denen D einen Ring der Formel

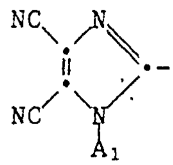

bildet, worin $A_1$ Wasserstoff, Alkyl mit 1 bis 4 Kohlenstoffatome oder mit Alkoxy mit 1 bis 4 Kohlenstoffatomen, Phenoxy, Carbalkoxy mit 2 bis 8 Kohlenstoffatomen, Acetyl, Benzoyl oder Cyano substituiertes Alkyl mit 1 bis 4 Kohlenstoffatomen ist, sind ebenfalls gut zur Verwendung in Silberfarbbleichmaterialien geeignet. Dies ist insbesondere dann der Fall, wenn in der Kupplungskomponente $R_1$ -NHCOL$_1$ ist, worin $L_1$ Alkyl mit 1 bis 14 Kohlenstoffatomen oder N-Methyl-N-phenylcarbonamido ist, $R_6$ -$NR_2R_3$, worin $R_2$ und $R_3$ unabhängig voneinander Wasserstoff, Alkyl mit 1 bis 8 Kohlenstoffatomen oder mit Phenyl oder Methoxy substituiertes Alkyl mit 1 bis 4 Kohlenstoffatomen sind, und $R_4$ Wasserstoff oder Methoxy ist.

Weitere bevorzugte Farbstoffe der Formel (1) enthalten als Ring D einen 1,2,4-Triazolylrest, der in 1-Stellung gegebenenfalls durch Decyl substituiert ist. Bei den besonders bevorzugten Farbstoffen dieser Klasse sind in der Kupplungskomponente $R_1$ und $R_4$ Wasserstoff und $R_6$ ist -$NR_2R_3$, worin $R_2$ und $R_3$ unabhängig voneinander Alkyl mit 1 bis 4 Kohlenstoffatomen sind, das gegebenenfalls mit Phenyl substituiert ist.

Von den schwefelhaltigen Heterocyclen D eignen sich vorzugsweise solche der Formeln

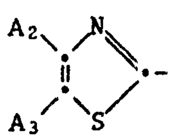 , 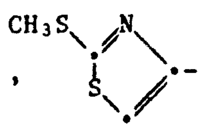 und 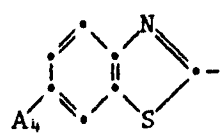 ,

worin $A_2$ und $A_3$ unabhängig voneinander Wasserstoff, Nitro oder p-Nitrophenyl sind, und $A_4$ Wasserstoff oder Alkoxy mit 2 bis 4 Kohlenstoffatomen ist. Solche Heterocyclen enthaltende Farbstoffe der Formel (1) sind dann bevorzugt, wenn in der Kupplungskomponente $R_1$ Wasserstoff, Alkyl mit 5 bis 10 Kohlenstoffatomen, -NHCOL$_1$, worin $L_1$ Alkyl mit 1 bis 20 Kohlenstoffatomen ist, $R_6$ Wasserstoff oder -$NR_2R_3$, worin $R_2$ und $R_3$ unabhängig voneinander Wasserstoff, Alkyl mit 1 bis 4 Kohlenstoffatomen, $(CH_2)_pNHCOL_3$, worin $L_3$ Alkyl mit 1 bis 4 Kohlenstoffatomen und p 1, 2, 3 oder 4 ist, oder Benzyl sind, und $R_4$ Wasserstoff, Methoxy oder -$(OCH_2CH_2)_2OCH_3$ ist.

Eine weitere Gruppe geeigneter Heterocyclen D entspricht den Formeln

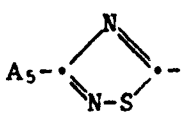 und 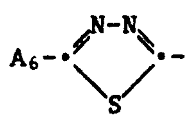 ,

worin $A_5$ Phenyl, Chlor, Trichlormethan oder Benzylthio und $A_5$ Phenyl oder Alkyl mit 1 bis 12 Kohlenstoffatomen ist. In Verbindung mit Kupplungskomponenten, worin $R_1$ Wasserstoff, -NHCOL$_1$, worin $L_1$ Alkyl mit 1 bis 20 Kohlenstoffatomen ist, und $R_6$ -$NR_2R_3$, worin $R_2$ und $R_3$ unabhängig voneinander Wasserstoff, Alkyl mit 1 bis 6 Kohlenstoffatomen oder mit Methoxy, Hydroxyl oder Phenyl substituiertes Alkyl mit 1 bis 4 Kohlenstoffatomen sind, und $R_4$ Wasserstoff oder Methoxy ist, stellen die genannten Heterocyclen Farbstoffe der Formel (1) dar, die sich gut zur Verwendung in Silberfarbbleichmaterialien eignen.

Einen weiteren Gegenstand der vorliegenden Erfindung bilden solche Verbindungen der Formel (1), worin D die zur Vervollständigung des Restes der Formel

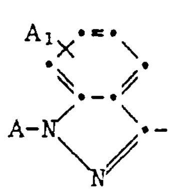

notwendigen Atome darstellt, worin A und $A_1$ unabhängig voneinander Wasserstoff oder Alkyl mit 1 bis 4 Kohlenstoffatomen ist, oder Nitro substituiertes Phenyl sind,
$R_1$ Wasserstoff, $-NHCOL_1$, worin $L_1$ Alkyl mit 6 bis 12 Kohlenstoffatomen ist,
$R_6$ $-NR_2R_3$, worin $R_2$ und $R_3$ unabhängig voneinander Alkyl mit 1 bis 4 Kohlenstoffatomen oder phenylsubstituiertes Alkyl mit 1 bis 4 Kohlenstoffatomen sind, und
$R_4$ Wasserstoff oder Alkoxy mit 1 bis 4 Kohlenstoffatomen ist.

In diesen Verbindungen sind A und $A_1$ unabhängig voneinander vorzugsweise Wasserstoff, Methyl oder 4-Nitrophenyl, $R_1$ ist Wasserstoff oder $-NHCOL_1$, worin $L_1$ Alkyl mit vorzugsweise 6 bis 9 Kohlenstoffatomen ist, $R_6$ ist $-NR_2R_3$ , worin $R_2$ und $R_3$ unabhängig voneinander Methyl, Aethyl, Benzyl oder Phenylethyl sind, und $R_4$ ist Wasserstoff oder Methoxy.

Ferner bilden die Verbindungen der Formeln (301) bis (320) einen weiteren Gegenstand der vorliegenden Erfindung.

Die erfindungsgemässen photographischen Silberfarbbleichmaterialien, welche die Azofarbstoffe der Formel (1) enthalten, besitzen eine Reihe von Vorteilen.

Da die Farbstoffe der Formel (1) in stabilen Oelemulsionen gelöst sind, können sie keine unerwünschte photographische Wirkung auf die Silberhalogenidkristalle ausüben. Die Absorptionsspektren sind weitgehend invariant und unabhängig von der Art der Behandlung in photographischen Verarbeitungsbäder.

Das hochsiedende organische Lösungsmittel wirkt nicht nur als Lösungsmittel für die Farbstoffe, sondern kann gleichzeitig Weichmacher für die Gelatine sein.

Ferner besitzen die erfindungsgemässen Aufzeichnungsmaterialien eine hohe Licht- und Wärmebeständikeit.

Die Herstellung der erfindungsgemäss verwendeten Azofarbstoffe der Formel (1) erfolgt nach üblichen Methoden, wie sie z.B. in DE-A-2.509.560, DE 2.514.581, DE 2.840.991, US 4.028.323, CH 589.697 und CH 595.420 beschrieben sind, indem man ein Amin der Formel

(2) 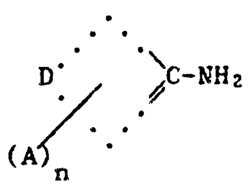 ,

worin D, A und n die angegebene Bedeutung haben, diazotiert oder nitrosiert und mit einer Verbindung der Formel

(3) 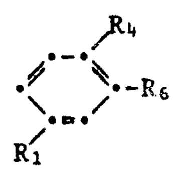 ,

worin $R_1$, $R_6$ und $R_4$ die angegebene Bedeutung haben, in wässrigem Medium kuppelt.

In erfindungsgemässen Aufzeichnungsmaterial kann ein transparentes, metallisch-reflektierendes oder vorzugsweise weiss-opakes Material als Träger verwendet werden, das vorzugsweise keine Flüssigkeit aus den Bädern aufzusaugen vermag.

Der Träger kann beispielsweise aus gegebenenfalls pigmentiertem Cellulosetriacetat oder Polyester bestehen. Wenn er aus Papierfilz besteht, muss dieser beidseitig lackiert oder mit Polyäthylen beschichtet sein. Auf mindestens einer Seite dieses Trägers befinden sich die lichtempfindlichen Schichten, vorzugsweise in der bekannten Anordnung, d.h. zuunterst eine rot sensibilisierte Silberhalogenidemulsionsschicht, die einen blaugrünen Azofarbstoff z.B. der Formel (1) enthält, darüber eine grün sensibilisierte Silberhalogenidemulsionsschicht, die einen purpurfarbenen Azofarbstoff z.B. der Formel (1) enthält und zuoberst eine blauempfindliche Silberhalogenidemulsionsschicht, die einen gelben Azofarbstoff z.B. der Formel (1) enthält. Das Material kann auch Unterschichten, Zwischenschichten, Filterschichten und Schutzschichten enthalten, doch soll die gesamte Trockenschichtdicke der Schichten in der Regel 20 µm nicht übersteigen.

Die erfindungsgemäss verwendeten Farbstoffe der Formel (1) sind lipophil und werden im allgemeinen als Lösungen in hochsiedenden Lösungsmitteln in die Gelatine eingearbeitet. In den meisten Fällen genügt

es, die zu verwendenden Farbstoffe als Lösung in eines solchen Lösungsmittel, eventuell unter Zuhilfenahme eines leicht flüchtigen Hilfslösungsmittels bei normaler oder leicht erhöhter Temperatur zu einer wässerigen Gelatinelösung unter guter Durchmischung zuzusetzen. Anstelle des einfachen Rührens können auch die üblichen Verteilungsmethoden mittels Knet- und/oder Scherkräften oder Ultraschall zur Anwendung gelangen. Anschliessend wird die Mischung mit einer Silberhalogenid und/oder andere Materialien zur Erzeugung photographischer Bilder enthaltenden Gelatine zusammengebracht, auf einer Unterlage in üblicher Weise zu einer Schicht gegossen und gegebenenfalls getrocknet.

Es ist auch möglich, den Farbstoff in fester Form als feine Suspension zuzugeben. Es ist desweiteren möglich, die Farbstoffe in Gegenwart von hochmolekularen Polymeren in die Geletine einzuarbeiten. Von besonderem Interesse sind für diese Anwendung Latices.

Die Giesslösung kann noch weitere Zusätze wie Härtungsmittel, Netzmittel sowie spektrale Sensibilisatoren und Stabilisatoren für das Silberhalogenid enthalten.

Die erfindungsgemäss verwendeten Azofarbstoffe der Formel (1) gehen keine chemischen Reaktionen mit den lichtempfindlichen Materialien ein. Die Farbstoffe sind sehr diffusionsfest, weil sie stabile, organische Lösungen bilden. Sie sind gegen Calciumionen unempfindlich und gut bleichbar.

Ferner erzeugen sie bei der Zugabe zu den Giesslösungen weder einen Viskositätsanstieg noch eine wesentliche Viskositätsänderung beim Stehenlassen des Giessgemisches.

Die spektralen Absorptionen in Gelatine liegen so, dass die Farbstoffe der Formel (1) je nach Struktur zu einem Farbstofftripel, zusammengestellt aus je einem Gelb-, Purpur- und Blaugrünfarbstoff, kombiniert werden können, das über dem ganzen Dichtebereich für das Auge neutral erscheinende Grautöne aufweist.

Das mit einem oder mehreren Azofalbstoffen der Formel (1) hergestellte photographische Silberfarbbleichmaterial zeichnet sich insbesondere durch brillante Farben, gute Farbwiedergabe und ausgezeichnete Lichtbeständigkeit aus.

Die Verarbeitung der belichteten und entwickelten Silberfarbbleichmaterialien erfolgt in üblicher Weise und umfasst die Farbbleichung, die Silberbleichung und die Fixierung und anschliessende sowie gegebenenfalls auch zwischen den einzelnen Stufen liegende Wässerungen. Die Farbbleichung und die Silberbleichung, gegebenenfalls auch die Fixierung, können in einer einzigen Behandlungsstufe zusammengefasst werden.

Zur Silberentwicklung können Bäder üblicher Zusammensetzung verwendet werden, z.B. solche, die als Entwicklersubstanz Hydrochinon oder zusätzlich noch ein 1-Phenyl-3-pyrazolidinon enthalten. Ein Liter Entwicklungsbad soll z.B. zwischen 0,3 und 60 mMol Natriumthiosulfat enthalten, wobei die optimale Menge je nach der Beschaffenheit des Materials, der Temperatur des Entwicklungsbades und der gewünschten Einwirkungsdauer innerhalb der angegebenen Grenzen schwanken kann. Es ist auch möglich, Entwicklerverbindungen oder Entwicklervorläufer in das photographische Material einzubauen. Man sorgt dabei durch geeignete Pufferung dafür, dass diese Substanzen in der trockenen Schicht während der Lagerung inaktiv bleiben. Man benötigt in diesem Fall zur Ingangsetzung der Entwicklung lediglich ein Aktivatorbad mit hohem pH-wert, das frei von Entwicklersubstanzen sein kann.

Als Farbbleichbäder - sofern die Farbbleichung als getrennte Behandlungsstufe durchgeführt wird - werden vorzugsweise solche verwendet, die neben einer starken Säure, einem wasserlöslichen Jodid und einem Oxydationsschutzmittel für das Jodid einen Farbbleichkatalysator enthalten. Kombinierte Farb- und Silberfarbbleichbäder, welche bevorzugt sind, enthalten neben den angegebenen Komponenten in der Regel noch ein wasserlösliches Oxydationsmittel. Geeignete Farbbleichkatalysatoren sind in erster Linie Diazinverbindungen, z.B. gemäss DE-A-2 010 280.

Unter starken Säuren sind hier solche zu verstehen, welche des Farbbleichbad bzw. dem kombinierten Farb- und Silberbleichbad einen pH-Wert von höchstens 2 verleihen. Es können also z.B. Salzsäure, Phosphorsäure und insbesondere Schwefelsäure, p-Toluolsulfonsäure oder Sulfaminsäure verwendet werden.

Als wasserlösliches Jodid kann man Alkalijodide verwenden, wie beispielsweise Kaliumjodid oder Natriumjodid.

Geeignete Oxydationsmittel sind Nitrosoverbindungen, wie z.B. p-Nitrosodimethylanilin, Nitroverbindungen, wie z.B. aromatische Nitroverbindungen und vorzugsweise aromatische Mono- oder Dinitrobenzolsulfonsäuren,z.B. m-Nitrobenzolsulfonsäure.

Als Oxydationsschutzmittel verwendet man Reduktone oder wasserlösliche Mercaptoverbindungen, sowie tertiäre, wasserlösliche Phosphine. Letztere sind auch gemäss DE-A-2 651 969 als Bleichbeschleuniger wirksam. Geeignete Reduktone sind insbesondere aci-Reduktone mit einer 3-Carbonyl-endiol-(1,2)-Gruppierung wie Reduktinsäure, Triose-Redukton oder vorzugsweise Ascorbinsäure.

Als Mercaptoverbindungen kommen solche der Formel $HSA(B)_m$ infrage, worin A ein aliphatisches, cycloaliphatisches, araliphatisches, aromstisches oder heterocyclisches Brückenglied, B ein wasserlöslichmachender Rest und m eine ganze Zahl von höchstens 4 ist (vgl. DE-A-2 258 076 und DE-A-2 423 819).

Auch Thiolaktone, wie sie in DE-A-3 045 059 beschrieben werden, sind als Oxidationsschutzmittel geeignet.

Das Fixierbad kann in bekannter und üblicher Weise zusasmengesetzt sein. Als Fixiermittel geeignet ist z.B. Natriumthiosulfat oder vorzugsweise Ammoniumthiosulfat, gewünschtenfalls mit Zusätzen wie Natriumbisulfit, Natriummetabisulfit und/oder Ammoniumbisulfit sowie gegebenenfalls Komplexierungsmittel, wie Aethylendiamintetraessigsäure.

Die Behandlungsbäder können weitere übliche Zusätze wie z.B. Härtungsmittel, Netzmittel, optische Aufheller oder UV-Schutzmittel enthalten.

Herstellungsvorschriften:

Herstellungsvorschrift 1:

Farbstoff der Formel

(103) 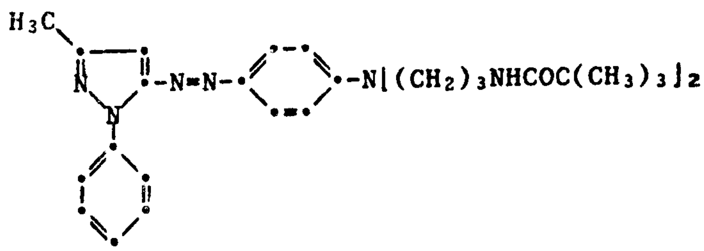

Zu einer Lösung von 41,5 g N,N-Bis-(3-aminopropyl)anilin und 45 g Triäthylamin in 150 ml Acetonitril tropft man bei ca. 10 °C unter Rühren 53 g Pivaloylchlorid zu und lässt danach noch ca. 6 Stunden bei Raumtemperatur ausreagieren. Dann wird mit Wasser verdünnt, abgesaugt, mehrmals mit Wasser gewaschen und unter Vakuum bis zur Gewichtskonstanz getrocknet. Man erhält 48 g N,N-Bis-(3-Pivaloylaminopropyl)anilin mit einem Schmelzpunkt von 72 °C.

Zu einer Lösung von 1 g 5-Amino-3-methyl-1-phenyl-pyrazol in 30 ml Wasser und 15 ml konzentrierter Salzsäure (37 %) gibt man bei -10 bis -5 °C unter Rühren eine Lösung von 0,4 g Natriumnitrit in 3 ml Wasser und lässt bis zum Verschwinden der Nitritreaktion ausreagieren. Dann gibt man diese Lösung zu einer Lösung von 2.2 g der oben hergestellten Kupplungskomponente in 25 ml Eisessig und lässt ca. 3 Stunden reagieren. Bei Zugabe von Natriumacetat scheidet sich ein Oel ab, das mit Methylenchlorid extrahiert und durch Chromatographie (Chloroform/Isopropanol 19:1) über Kieselgel gereinigt wird. Man erhält 0,9 g der Verbindung der Formel (103).

Herstellungsvorschrift 2:

Farbstoff der Formel

(303) 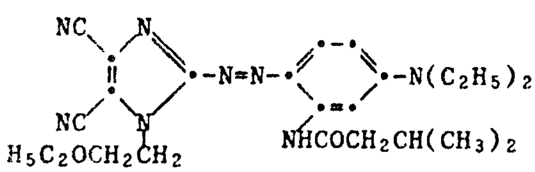

Zu einer Lösung von 2.7 g 2-Amino-4,5-dicyano-imidazol in 140 ml konzentrierter Salzsäure tropft man unter gutem Rühren bei 20-25 °C eine Lösung von 1,4 g Natriumnitrit in 20 ml Wasser zu.
Nach 30 Minuten wird der Nitrit-Ueberschuss durch Zugabe von Sulfaminsäure zerstört. Diese Lösung gibt man zu einer Lösung von 4,4 g N,N-Diäthyl-3-isovalerylamino-anilin in 150 ml Methanol und stellt mit 50%iger wässriger Natriumacetat-Lösung auf einen pH-Wert von 5.5 ein. Nach 2 Stunden wird abgesaugt und der Rückstand mit Wasser gewaschen und im Vakuum getrocknet. Ausbeute:7,3 g.

1,0 g dieses Zwischenprodukts wird zusammen mit 0,61 g 2-Aethoxyäthyl-toluolsulfonat (hergestellt gemäss J. Chem. Soc. 1957, 2931) und 0,30 g N-Aethyldiisopropylamin in 20 ml wasserfreiem Toluol 14 Stunden bei 80 ° C erwärmt. Dann wird filtriert, das Filtrat eingedampft und durch Chromatographie (Chloroform/Methanol 19:1) über Kieselgel gereinigt.
Man erhält 0,8 g des Farbstoffes der Formel (303).

Herstellungsvorschrift 3:

Farbstoff der Formel

(311) 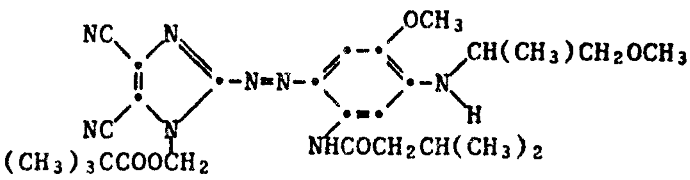

56,4 g 2-Methoxy-5-propionylamino-anilin und 37 g Methoxyaceton werden in 200 ml Methylcellosolve in Gegenwart von 0,6 g konzentrierter Schwefelsäure (96 %) und 1.9 g Platin auf Kohle bei 60 ° C und 0,94 bar mit Wasserstoff reduziert. Nach Beendigung der Wasserstoffaufnahme wird filtriert und das Lösungsmittel im Vakuum abdestilliert. Der Rückstand wird anschliessend in 330 ml 6%iger Salzsäure während 10 Stunden bei einer Temperatur von 80 ° C gehalten. Dann wird mit Natronlauge auf einen pH-Wert von ca. 8 eingestellt und das abgeschiedene Oel mit Aethylacetat extrahiert. Die so erhaltene Lösung wird über Magnesiumsulfat getrocknet, filtriert und im Vakuum eingedampft.

Zu einer Lösung von 20 g dieses Rückstandes und 20 g Triäthylamin in 50 ml Acetonitril gibt man bei ca. 10 ° C unter gutem Rühren 12 g Isovaleriansäurechlorid, lässt 5 Stunden reagieren, filtriert vom ausgefallenen Triäthylammoniumchlorid ab und dampft das Filtrat ein. Der Rückstand wird in 250 ml 7%iger Salzsäure gelöst und durch fraktionierte Fällung mit Natriumcarbonat und Extraktion mit Chloroform gereinigt.

Zu einer Lösung von 1,1 g 2-Amino-4,5-dicyano-imidazol in 50 ml konzentrierter Salzsäure tropft man unter gutem Rühren bei 20-25 ° C eine Lösung von 0,6 g Natriumnitrit in 10 ml Wasser zu. Nach 30 Minuten wird der Nitrit-Ueberschuss durch Zugabe von Sulfaminsäure zerstört. Diese Lösung gibt man zu einer Lösung von 2,4 g der gemäss obiger Beschreibung hergestellten Kupplungskomponente in 30 ml Eisessig, stellt mit einer 50%igen wässrigen Natriumacetatlösung auf einen pH-Wert von 5 ein und lässt eine Stunde bei 20-25 ° C reagieren. Das Produkt wird mit Methylenchlorid extrahiert und die so erhaltene Lösung im Vakuum eingedampft.
0,66 g dieses Rückstandes werden mit 0,45 g Bromaceton und 0,85 g wasserfreiem Kaliumcarbonat in einem Gemisch von 20 ml Toluol und 5 ml Dimethylformamid in einem Einschlussrohr während 20 Stunden bei 80 ° C erwärmt.

Dann wird filtriert, das Filtrat eingedampft und der Rückstand über Kieselgel chromatographiert (Hexan/Dioxan 11:9).

Man erhält 0,4 g des Farbstoffs der Formel (311).

Herstellungsvorschrift 4:

Farbstoff der Formel

(405) 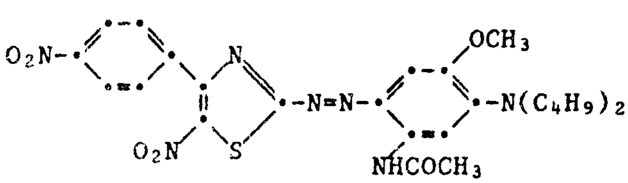

30 g 2-Amino-4-(4'-nitrophenyl)-1,3-thiazol (hergestellt nach J. Chem. Soc. 1959, 2365) und 100 ml Acetanhydrid werden 3 Stunden bei 140 °C erwärmt. Das überschüssige Acetanhydrid wird im Vakuum abdestilliert und der Rückstand mit 500 ml warmem Wasser behandelt, filtriert, gewaschen und bis zur Gewichtskonstanz getrocknet. Man erhält 34 g 2-Acetamido-4-(4'-nitrophenyl)-1,3-thiazol.

Zu einer Suspension von 30 g dieser Verbindung in 150 ml konzentrierter Schwefelsäure gibt man bei 0-5 °C unter gutem Rühren tropfenweise 7,1 g 98%ige Salpetersäure und lässt 25 Stunden bei dieser Temperatur reagieren. Dann wird auf 500 g Eis gegossen, filtriert und der Rückstand gut mit Wasser gewaschen und anschliessend in einem Gemisch von 100 ml konzentrierter Salzsäure, 200 ml Eisessig und 200 ml Wasser während 6 Stunden bei 95 °C hydrolysiert. Dann wird vorsichtig mit Kalilauge auf einen pH-Wert von 8 gestellt, filtriert und der Rückstand bis zur Gewichtskonstanz getrocknet. Man erhält 19 g 2-Amino-5-nitro-4-(4'-nitrophenyl)-1,3-thiazol.

Zu einer Suspension von 0,52 g 2-Amino-5-nitro-4-(4'-nitrophenyl)-1,3-thiazol in einem Gemisch von 25 ml Essig- und 3 ml Propionsäure tropft man bei 0-5 °C unter Rühren eine Lösung von 0,16 g Natriumnitrit in 5 g konzentrierter Schwefelsäure. Nachdem sich eine Lösung gebildet hat, lässt man noch eine Stunde nachreagieren, gibt eine Lösung von 0,84 g N-(3-Diäthylamino-4-methoxy-phenyl)phosphoramidsäure-di-(2-äthoxyäthyl)ester (hergestellt gemäss EP-A-41 474) in 20 ml Methanol zu, lässt die Temperatur auf 20 °C steigen und setzt soviel 50%ige wässrige Natriumacetatlösung zu, dass deutlich Farbstoffbildung einsetzt. Nach 5 Stunden wird mit Wasser verdünnt, filtriert, der Rückstand im Vakuum getrocknet und durch Chromatographie (Hexan/Methyläthylketon 4:6) über Kieselgel gereinigt. Man erhält 0,11 g des Farbstoffs der Formel (405).

Herstellungsvorschrift 5:

Farbstoff der Formel

(501)

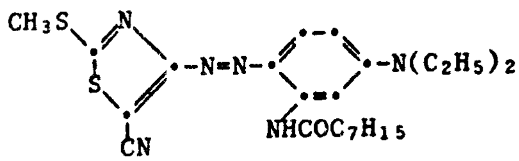

Zu einer Lösung von 1,5 g 4-Amino-5-cyano-2-methylthio-1,3-thiazol (hergestellt gemäss Tetrahedron 32, 1976, 613 ) in einem Gemisch von 35 ml Essig- und 15 ml Propionsäure gibt man unter gutem Rühren bei -5 °C eine Lösung von 0,6 g Natriumnitrit und 1,1 g Natriumhydrogensulfat in 5 ml konzentrierter Schwefelsäure. Nach 3 Stunden wird der Nitritüberschuss mit Sulfaminsäure zerstört, eine Lösung von 1,1 g N,N-Diäthyl-3-oktanoylamino-anilin in 10 ml Essigsäure zugesetzt, die Temperatur auf 20 °C erhöht und 3 Stunden bei dieser Temperatur gerührt. Das Reaktionsgemisch tropft man zu ca. 200 g Eis, saugt sofort ab und wäscht gründlich mit Wasser. Nach Trocknung im Vakuum erhält man 1 g des Farbstoffe der Formel (501).

Herstellungsvorschrift 6:

Farbstoff der Formel

(607)

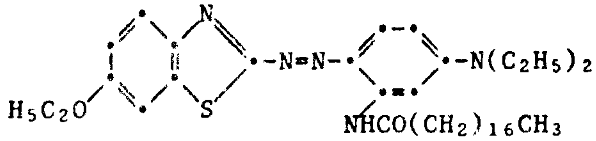

Zu einer Lösung von 0,78 g 2-Amino-6-äthoxy-benzthiazol in einem Gemisch von 1 ml Essigsäure, 5 ml konzentrierter Schwefelsäure und 2 ml Wasser tropft man bei -10 °C unter Rühren eine Lösung von 0.28 g Natriumnitrit in 1,5 ml Wasser zu. Dann lässt man die Temperatur langsam bis auf 20 °C ansteigen, gibt

diese Lösung zu einer Lösung von 1,7 g N,N-Diäthyl-3-stearoylamino-anilin, lässt 2 Stunden bei Rautemperatur reagieren, verdünnt mit 200 ml Eiswasser und filtriert den ausgefallenen Farbstoff ab. Nach Trocknung und Reinigung durch Chromatographie (Toluol/Aceton 19:1) über Kieselgel erhält man 0,55 g des Farbstoffe der Formel (607).

Herstellungsvorschrift 7:

Farbstoff der Formel

(802) 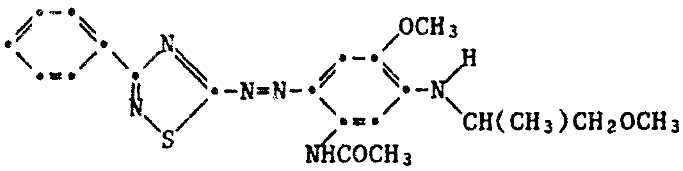

Zu einer Lösung von 0,88 g 5-Amino-3-phenyl-1,2,4-thiadiazol in 10 ml 85%iger Ameisensäure tropft man bei ca. 10 ° C unter Rühren eine Lösung von 0,17 g Natriumnitrit in 1.5 ml Wasser zu und lässt ca. 30 Minuten reagieren. Dann wird auf 0 ° C gekühlt, filtriert und der Rückstand zu einer Lösung von 1,3 g 5-Acetylamino-2-methoxy-N-(2'-methoxy-isopropyl)anilin in einem Gemisch von 20 ml Methanol und 4 ml Essigsäure gegeben. Nach 5 Stunden bei 40 ° C wird am Vakuum eingedampft und der Rückstand durch Chromatographie (Toluol/Aethylacetat 15:5) über Kieselgel gereinigt. Man erhält 0,05 g des Farbstoffe der Formel (802).

Herstellungsvorschrift 8:

Farbstoff der Formel

(901) 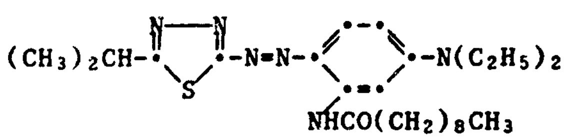

Zu einer Lösung von 0,5 g 2-Amino-5-isopropyl-1,3,4-thiadiazol in 30 ml konzentrierter Phosphorsäure gibt man bei -10 ° C unter gutem Rühren in kleinen Portionen 0,24 g fein gepulvertes Natriumnitrit, rührt 5 Minuten nach und gibt diese Lösung zu einer Lösung von 0,9 g N,N-Diäthyl-3-decanoylamino-anilin in 20 ml Essigsäure. Nach einer Stunde bei 0 ° C wird mit Wasser verdünnt, mit Methylenchlorid extrahiert und der nach Eindampfen des Extraktes erhaltene Rückstand durch Chromatographie über Kieselgel gereinigt. Man erhält 0,15 g des Farbstoffs der Formel (901).

In ähnlicher Weise werden die übrigen, in den folgenden Tabellen 1 bis 9 wiedergegebenen Farbstoffe hergestellt.

Tabelle 1:

(100)

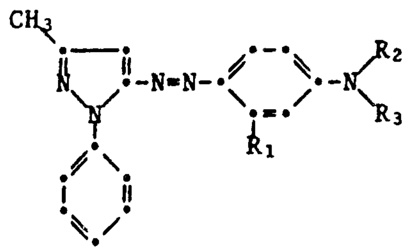

| Verbindung der Formel | $R_1$ | $R_2$ | $R_3$ | $\lambda_{max}$ (nm) (Chloroform) |
|---|---|---|---|---|
| 101 | $CH_3$ | $CH_3$ | $CH_3$ | 449 |
| 102 | H | $n-C_3H_7$ | $n-C_3H_7$ | 470 |
| 103 | H | $(CH_2)_3NHCOC(CH_3)_3$ | $(CH_2)_3NHCOC(CH_3)_3$ | 450 |
| 104 | H | $(CH_2)_3NHCO(CH_2)_6CH_3$ | $(CH_2)_3NHCO(CH_2)_6CH_3$ | 445 |
| 105 | H | $(CH_2)_3NHCO(CH_2)_{10}CH_3$ | $(CH_2)_3NHCO(CH_2)_{10}CH_3$ | 450 |

Tabelle 2:

(200)

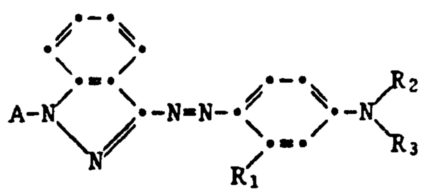

| Verbindung der Formel | $R_1$ | $R_2$ | $R_3$ | A | $\lambda_{max}$ (nm) (Chloroform) |
|---|---|---|---|---|---|
| 201 | H | $CH_3$ | $CH_2CH_2-$ 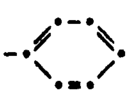 | H | 422 |
| 202 | $NHCO(CH_2)_6CH_3$ | $C_2H_5$ | $C_2H_5$ | H | 474 |
| 203 | $NHCO(CH_2)_8CH_3$ | $C_2H_5$ | $C_2H_5$ | $CH_3$ | 540 |

<u>Tabelle 3</u>

(300) 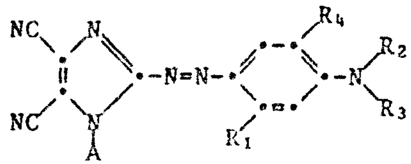

| Verbindung der Formel | A | $R_1$ | $R_4$ | $R_2$ | $R_3$ | $\lambda_{max}$ (nm) ($CHCl_3$) |
|---|---|---|---|---|---|---|
| 301 | $C_2H_5$- | $-NHCOCH_3$ | H | $n-C_6H_{13}$ | $n-C_6H_{13}$ | 531 |
| 302 | $CH_3$- | $-NHCO(CH_2)_{12}CH_3$ | H | $C_2H_5$ | $C_2H_5$ | 528 |
| 303 | $H_5C_2OCH_2CH_2$- | $-NHCOCH_2CH(CH_3)_2$ | H | $C_2H_5$ | $C_2H_5$ | 526 |
| 304 | 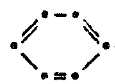 $-OCH_2CH_2-$ | $-NHCOCH_2CH(CH_3)_2$ | H | $C_2H_5$ | $C_2H_5$ | 528 |
| 305 | 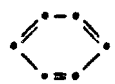 $-OCH_2CH_2-$ | $-NHCOCH_2CH(CH_3)_2$ | $OCH_3$ | H | $CH(CH_3)CH_2OCH_3$ | 548 |
| 306 | $H_5C_2OCH_2CH_2$- | $-NHCOCH_2CH(CH_3)_2$ | $OCH_3$ | H | $CH(CH_3)CH_2OCH_3$ | 550 |
| 307 | $H_5C_2OOCCH_2$- | $-NHCOCH_2CH(CH_3)_2$ | $OCH_3$ | H | $CH(CH_3)CH_2OCH_3$ | 552 |
| 308 | $CH_3COCH_2$- | $-NHCOCON-$ $CH_3$ 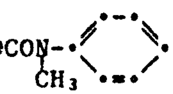 | $OCH_3$ | H | $CH(CH_3)CH_2OCH_3$ | 548 |
| 309 | 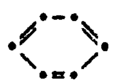 $-CH_2OOCCH_2-$ | $-NHCOCON-$ $CH_3$ 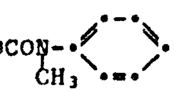 | $OCH_3$ | H | $CH(CH_3)CH_2OCH_3$ | 551 |

Tabelle 3: (Fortsetzung)

| Verbindung der Formel | A | $R_1$ | $R_4$ | $R_2$ | $R_3$ | $\lambda_{max}$ (nm) ($CHCl_3$) |
|---|---|---|---|---|---|---|
| 310 | $NC-CH_2-$ | $-NHCOCH_2CH(CH_3)_2$ | $OCH_3$ | H | $CH(CH_3)CH_2OCH_3$ | 562 |
| 311 | $(CH_3)_3CCOOCH_2-$ | $-NHCOCH_2CH(CH_3)_2$ | $OCH_3$ | H | $CH(CH_3)CH_2OCH_3$ | 550 |
| 312 | 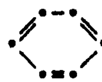 $-COCH_2-$ | $-NHCOCH_2CH(CH_3)_2$ | $OCH_3$ | H | $CH(CH_3)CH_2OCH_3$ | 549 |
| 313 | $CH_3COCH_2-$ | $-NHCOCH_2CH(CH_3)_2$ | $OCH_3$ | H | $CH(CH_3)CH_2OCH_3$ | 550 |
| 314 | 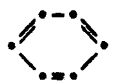 $-CH_2OOCCH_2-$ | $-NHCOCH_2CH(CH_3)_2$ | $OCH_3$ | H | $CH(CH_3)CH_2OCH_3$ | 552 |
| 315 | 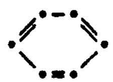 $-CH_2OOCCH_2-$ | $-NHCOCH_3$ | $OCH_3$ | H | $-CH_2-$ 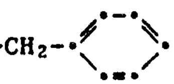 | 553 |
| 316 | $H_5C_2OOCCH_2-$ | $-NHCOCH_3$ | $OCH_3$ | H | $-CH_2-$ 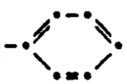 | 551 |
| 317 | $H_5C_2OCH_2CH_2-$ | $-NHCOCH_2CH(CH_3)_2$ | $OCH_3$ | H | $CH(CH_3)CH_2OCH_3$ | 545 |
| 318 | $H_5C_2OCH_2CH_2-$ | $-NHCOCH_3$ | $OCH_3$ | H | $CH(CH_3)CH_2OCH_3$ | 545 |
| 319 | 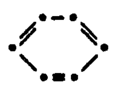 $-OCH_2CH_2-$ | $-NHCOCH_3$ | $OCH_3$ | H | $CH(CH_3)CH_2OCH_3$ | 547 |
| 320 | H | $-NHCOCH_2CH(CH_3)_2$ | $OCH_3$ | $C_2H_5$ | $C_2H_5$ | 568 |

Tabelle 4:

(400) 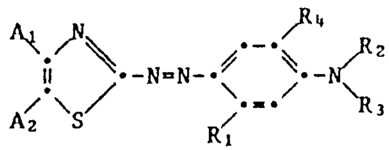

| Verbindung der Formel | $A_1$ | $A_2$ | $R_1$ | $R_4$ | $R_2$ | $R_3$ | $\lambda_{max}$ (nm) ($CHCl_3$) |
|---|---|---|---|---|---|---|---|
| 401 | H | H | H | H | $C_2H_5$ | $CH_2$- 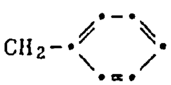 | 480 |
| 402 | H | $NO_2$ | H | H | $C_2H_5$ | $CH_2$- 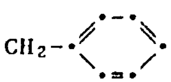 | 570 |
| 403 | H | $NO_2$ | H | H | $(CH_2)_3NHCOC(CH_3)_3$ | $(CH_2)_3NHCOC(CH_3)_3$ | 566 |
| 404 | $O_2N$- 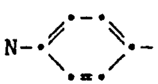 | $NO_2$ | $-NHCOCH_3$ | $OCH_3$ | n-$C_4H_9$ | n-$C_4H_9$ | 630 |

**Tabelle 5:**

(500) 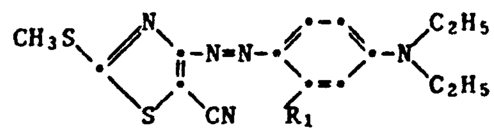

| Verbindung der Formel | $R_1$ | $\lambda_{max}$ (nm) (Chloroform) |
|---|---|---|
| 501 | $NHCO-C_7H_{15}$ | 538 |
| 502 | $NHCO-C_9H_{19}$ | 540 |

Tabelle 6:

(600) 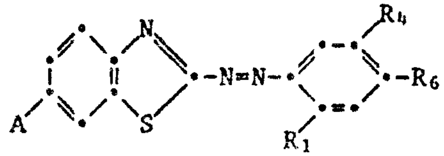

| Verbindung der Formel | A | $R_1$ | $R_4$ | $R_6$ | $\lambda_{max}$ (nm) (Chloroform) |
|---|---|---|---|---|---|
| 601 | H | -OH | $-OCH_2CH_2O$<br>$CH_3OCH_2CH_2$ | H | 534 |
| 602 | H | $-NHCOCH_2CH(CH_3)_2$ | H | $-N(CH_3)_2$ | 524 |
| 603 | H | $-NHCOCH_2CH(CH_3)_2$ | $OCH_3$ | $-N(C_2H_5)_2$ | 560 |
| 604 | $H_5C_2O$ | $-NHCO(CH_2)_6CH_3$ | H | $-N(C_2H_5)_2$ | 535 |
| 605 | $H_5C_2O$ | $-NHCO(CH_2)_{16}CH_3$ | H | $-N(C_2H_5)_2$ | 535 |
| 606 | $H_5C_2O$ | $-NHCOCH_2CH(CH_3)_2$ | $OCH_3$ | $-N(C_2H_5)_2$ | 563 |

**Tabelle 7:**

(700) 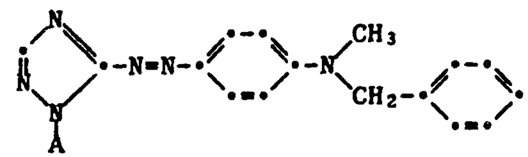

| Verbindung der Formel | A | $\lambda_{max}$ (nm) (Chloroform) |
|---|---|---|
| 701 | H | 454 |
| 702 | n-$C_{10}H_{21}$ | 460 |

Tabelle 8:

(800) 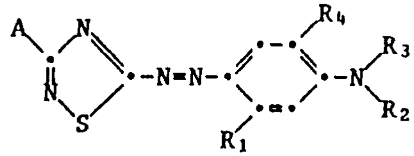

| Verbindung der Formel | A | $R_1$ | $R_4$ | $R_2$ | $R_3$ | $\lambda_{max}$ (nm) (Chloroform) |
|---|---|---|---|---|---|---|
| 801 | 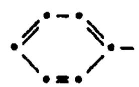 | $-NHCO(CH_2)_6CH_3$ | H | $C_2H_5$ | $C_2H_5$ | 530 |
| 802 | 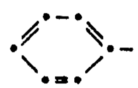 | $-NHCOCH_3$ | $OCH_3$ | H | $-CH(CH_3)CH_2OCH_3$ | 550 |
| 803 | Cl | $-NHCO(CH_2)_{16}CH_3$ | H | $C_2H_5$ | $C_2H_5$ | 536 |
| 804 | Cl | $-NHCOCH_2CH(CH_3)_2$ | H | $n-C_6H_{13}$ | $n-C_6H_{13}$ | 540 |
| 806 | Cl | $-NHCOCH_2CH(CH_3)_2$ | $OCH_3$ | H | $-CH(CH_3)CH_2OCH_3$ | 565 |
| 807 | Cl | $-NHCOCH_3$ | $OCH_3$ | H | $-CH_2-$ 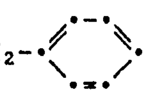 | 563 |

Tabelle 8: (Fortsetzung)

| Verbindung der Formel | A | $R_1$ | $R_4$ | $R_2$ | $R_3$ | λmax (nm) (Chloroform) |
|---|---|---|---|---|---|---|
| 808 | $Cl_3C-$ | $-NHCOCH_2CH(CH_3)_2$ | H | $C_2H_5$ | $C_2H_5$ | 535 |
| 809 | $Cl_3C-$ | $-NHCO(CH_2)_6CH_3$ | H | $C_2H_5$ | $C_2H_5$ | 537 |
| 810 | $Cl_3C-$ | $-NHCOCH_2CH(CH_3)_2$ | $OCH_3$ | H | $-CH(CH_3)CH_2OCH_3$ | 565 |
| 811 | $Cl_3C-$ | $-NHCOCH_3$ | $OCH_3$ | H | $-CH_2-$ 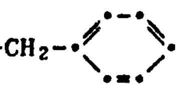 | 562 |
| 812 | 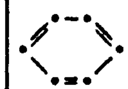 $-CH_2S-$ | $-NHCOCH_2CH(CH_3)_2$ | H | $n-C_6H_{13}$ | $n-C_6H_{13}$ | 537 |
| 813 | 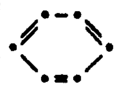 $-CH_2S-$ | $-NHCOCH_2CH(CH_3)_2$ | H | $C_2H_5$ | $C_2H_5$ | 531 |
| 814 | 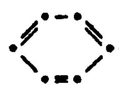 $-CH_2S-$ | $-NHCOCH_2CH(CH_3)_2$ | $OCH_3$ | H | $CH(CH_3)CH_2OCH_3$ | 531 |
| 815 | 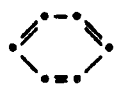 $-CH_2S-$ | $-NHCOCH_3$ | $OCH_3$ | H | $-CH_2-$ 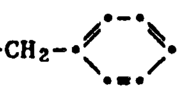 | 548 |

Tabelle 9:

(900) 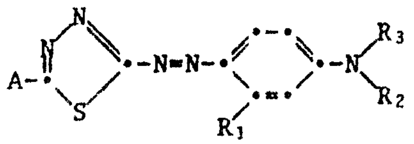

| Verbindung der Formel | A | $R_1$ | $R_2$ | $R_3$ | $\lambda_{max}$ (nm) (Chloroform) |
|---|---|---|---|---|---|
| 901 | $(CH_3)_2CH-$ | $-NHCO(CH_2)_8CH_3$ | $C_2H_5$ | $C_2H_5$ | 509 |
| 902 | $CH_3(CH_2)_{10}-$ | $-NHCO(CH_2)_6CH_3$ | $C_2H_5$ | $C_2H_5$ | 510 |
| 903 | 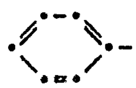 | H | $C_2H_5$ | $C_2H_4OH$ | 504 |
| 904 | 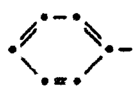 | $-NHCO(CH_2)_6CH_3$ | $C_2H_5$ | $C_2H_5$ | 530 |

Anwendungsbeispiel

13.2 mg des Farbstoffs der Formel (802) werden in 2 ml eines Gemisches von Aethylacetat und Trikresylphosphat (Mischungsverhältnis 9:1) gelöst und zu einer Mischung aus 6,6 ml 6%iger wässeriger Gelatinelösung, 0,9 ml destilliertem Wasser und 0,5 ml einer 8%igen Lösung des Natriumsalzes der Dibutylnaphthalinsulfonsäure gegeben und mit Ultraschall emulgiert.

2,5 ml der erhaltenen Emulsion werden mit 5 ml Wasser, 1,5 ml einer Gelatinesilberbromidjodidemulsion, die pro kg etwa 22 g Silber als Silberhalogenid und 70 g Gelatine enthält, 1 ml 4%ige Gelatinelösung und 1 ml einer 1%igen Lösung eines Härters der Formel

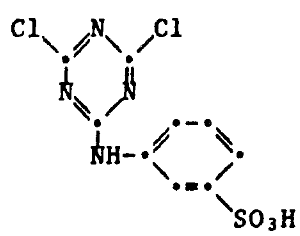

vermischt. Dieses Gemisch wird auf einen opaken Triacetatträger (Format 13 x 18 cm) gegossen und getrocknet. Hinter einem Stufenkeil wird das so erhaltene lichtempfindliche Material belichtet und bei 30 °C wie folgt verarbeitet:

| | |
|---|---|
| Entwicklung | 3 Minuten |
| Wässerung | 1 Minute |
| Silber- und Farbbleichung | 5 Minuten |
| Wässerung | 1 Minute |
| Fixierung | 4 Minuten |
| Wässerung | 6 Minuten |
| Trocknung | |

Das Entwicklerbad hat pro Liter Lösung folgende Zusammensetzung:

| | |
|---|---|
| Natriumsulfat | 50 g |
| 1-Phenyl-3-pyrazolidon | 0,2 g |
| Hydrochinon | 6 g |
| Natriumcarbonat | 35 g |
| Kaliumbromid | 4 g |
| Benztriazol | 0,3 g |

Das Silberfarbbleichbad hat pro Liter Lösung die Zusammensetzung:

| | |
|---|---|
| konzentrierte Schwefelsäure | 28 ml |
| m-Nitrobenzolsulfonsäure (Natriumsalz) | 10 g |
| Kaliumjodid | 6 g |
| Bis-(2-cyanoäthyl)-(2-sulfoäthyl)-phosphin (Natriumsalz) | 3 g |
| 2,3-Dimethylchinoxalin | 1,5 g |
| Benzylalkohol | 20 ml |

Das Fixierbad enthält pro Liter Lösung:

| | |
|---|---|
| Natriumthiosulfat | 200 g |
| Natriummetabisulfit | 20 g |

Man erhält einen brillanten, lichtechten Purpurkeil, der an den Stellen der stärksten Belichtung vollständig auf Weiss gebleicht ist.

Dieser Keil wird in einem Weather Ometer der Firma Atlas mit einer Xenonbogenlampe von 2500 Watt mit total 21 kJoule/cm$^2$ bestrahlt und die prozentuale Dichteabnahme bei einer ursprünglichen Dichte von 1.0 ermittelt.

In analoger Weise werden die Farbstoffe der Formeln (203), (301), (303), (304), (306), (318), (319), und (603) vergossen und geprüft.

Die folgende Tabelle enthält die entsprechenden Resultate.

Tabelle 10

| Verbindung der Formel | Dichteabnahme in % ($D_o$ = 1.0; 21 kJoule/cm$^2$) |
|---|---|
| 203 | 0 |
| 301 | 2 |
| 303 | 2 |
| 304 | 3 |
| 306 | 4 |
| 318 | 2 |
| 319 | 3 |
| 603 | 4 |
| 802 | 5 |

Die Tabelle zeigt, dass mit dem erfindungsgemässen Material, das die genannten Verbindungen enthält, photographische Bilder hergestellt werden können, die eine ausgezeichnete Lichtbeständigkeit besitzen.

## Patentansprüche

1. Photographisches Aufzeichnungsmaterial für das Silberfarbbleichverfahren, das in mindestens einer Silberhalogenidemulsionsschicht oder in einer an diese Schicht(en) grenzenden Kolloidschicht mindestens einen öllöslichen Farbstoff der Formel

(1) 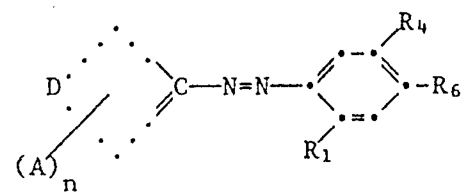

enthält, worin
D die zur Vervollständigung eines mindestens 1 Stickstoffatom enthaltenden 5-gliedrigen, gegebenenfalls benzanellierten Ringes notwendigen Atome darstellt,
A Wasserstoff, Alkyl mit 1 bis 12 Kohlenstoffatomen, mit Alkoxy, Phenoxy, Acyl, Acyloxy, Carbalkoxy, Cyano oder Halogen substituiertes Alkyl mit 1 bis 4 Kohlenstoffatomen, Alkoxy mit 1 bis 4 Kohlenstoffatomen, Phenyl, mit einer elektronegativen Gruppe substituiertes Phenyl, Alkylthio mit 1 bis 4 Kohlenstoffatomen, mit Phenyl substituiertes Alkylthio mit 1 bis 4 Kohlenstoffatomen, Cyano, Nitro oder Halogen, n 0, 1, 2 oder 3,
$R_1$ Wasserstoff, Alkyl mit 1 bis 4 Kohlenstoffatomen, Hydroxyl, -NHCOL$_1$, worin $L_1$ Alkyl mit 1-bis 20 Kohlenstoffatomen oder substituiertes Carbonamid ist,
$R_6$ Wasserstoff oder -NR$_2$R$_3$, worin $R_2$ und $R_3$ unabhängig voneinander Wasserstoff, Alkyl mit 1 bis 8 Kohlenstoffatomen oder mit Acylamino, Phenyl, Alkoxy oder Hydroxyl substituiertes Alkyl mit 1 bis 4 Kohlenstoffatomen sind, und
$R_4$ Wasserstoff, Alkoxy mit 1 bis 4 Kohlenstofatomen oder

$$-(OCH_2CH_2)_m-OCH_3$$

ist, worin m 1 oder 2 ist.

2. Photographisches Aufzeichnungsmaterial nach Anspruch 1, dadurch gekennzeichnet, dass der im Farbstoff der Formel (1) durch D gebildete Ring mindestens ein weiteres Heteroatom enthält.

3. Photographisches Aufzeichnungsmaterial nach Anspruch 2, dadurch gekennzeichnet, dass der im Farbstoff der Formel (1) durch D gebildete Ring ein Pyrazolyl-, Benzpyrazolyl-, Imidazolyl-, Triazolyl-,

Thiazolyl-, Benzthiazolyl-, Thiadiazolyl- oder Isothiadiazolylrest ist.

4. Photographisches Aufzeichnungsmaterial nach Anspruch 3, dadurch gekennzeichnet, dass der im Farbstoff der Formel (1) durch D gebildete Ring ein 1-Phenyl-3-methyl-pyrazolyl-rest ist.

5. Photographisches Aufzeichnungsmaterial nach Anspruch 4, dadurch gekennzeichnet, dass im Farbstoff der Formel (1) $R_1$ Wasserstoff oder Alkyl mit 1 bis 4 Kohlenstoffatomen und $R_6$ $-NR_2R_3$, worin $R_2$ und $R_3$ unabhängig voneinander Alkyl mit 1 bis 4 Kohlenstoffatomen oder $(CH_2)_pNHCOL_3$, worin $L_3$ Alkyl mit 4 bis 12 Kohlenstoffatomen und p 1, 2, 3 oder 4 ist, sind, und $R_4$ Wasserstoff ist.

6. Photographisches Aufzeichnungsmaterial nach Anspruch 3, dadurch gekennzeichnet, dass der im Farbstoff der Formel (1) durch D gebildete Ring ein Benzpyrazolyl- oder 1-Methylbenzpyrazolyl-rest ist.

7. Photographisches Aufzeichnungsmaterial nach Anspruch 6, dadurch gekennzeichnet, dass im Farbstoff der Formel (1) $R_1$ Wasserstoff oder $-NHCOL_1$, worin $L_1$ Alkyl mit 6 bis 12 Kohlenstoffatomen ist, $R_6$ $-NR_2R_3$, worin $R_2$ und $R_3$ unabhängig voneinander Alkyl mit 1 bis 4 Kohlenstoffatomen oder mit Phenyl substituiertes Alkyl mit 1 bis 4 Kohlenstoffatomen sind, und $R_4$ Wasserstoff ist.

8. Photographisches Aufzeichnungsmaterial nach Anspruch 3, dadurch gekennzeichnet, dass der im Farbstoff der Formel (1) durch D gebildete Ring der Formel

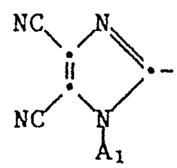

entspricht, worin $A_1$ Wasserstoff, Alkyl mit 1 bis 4 Kohlenstoffatomen oder mit Alkoxy mit 1 bis 4 Kohlenstoffatomen, Phenoxy, Carbalkoxy mit 2 bis 8 Kohlenstoffatomen, Acetyl, Benzoyl oder Cyano substituiertes Alkyl mit 1 bis 4 Kohlenstoffatomen ist.

9. Photographisches Aufzeichnungsmaterial nach Anspruch 8, dadurch gekennzeichnet, dass im Farbstoff der Formel (1) $R_1$ $-NHCOL_1$ worin $L_1$ Alkyl mit 1 bis 14 Kohlenstoffatomen oder N-Methyl-N-phenylcarbonamido ist, $R_6$ $-NR_2R_3$, worin $R_2$ und $R_3$ unabhängig voneinander Wasserstoff, Alkyl mit 1 bis 8 Kohlenstoffatomen oder mit Phenyl oder Methoxy substituiertes Alkyl mit 1 bis 4 Kohlenstoffatomen sind, und $R_4$ Wasserstoff oder Methoxy ist.

10. Photographisches Aufzeichnungsmaterial nach Anspruch 3, dadurch gekennzeichnet, dass der im Farbstoff der Formel (1) durch D gebildete Ring ein 1,2,4-Triazolylrest ist, der in 1-Stellung mit einem Decylrest substituiert sein kann.

11. Photographisches Aufzeichnungsmaterial nach Anspruch 10, dadurch gekennzeichnet, dass im Farbstoff der Formel (1) $R_1$ und $R_4$ Wasserstoff sind und $R_6$ $-NR_2R_3$ ist, worin $R_2$ und $R_3$ unabhängig voneinander Alkyl mit 1 bis 4 Kohlenstoffatomen oder mit Phenyl substituiertes Alkyl mit 1 bis 4 Kohlenstoffatomen ist.

12. Photographisches Aufzeichnungsmaterial nach Anspruch 3, dadurch gekennzeichnet, dass der im Farbstoff der Formel (1) durch D gebildete Ring der Formel

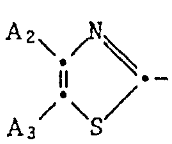 , 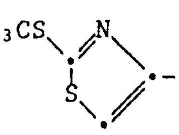 oder 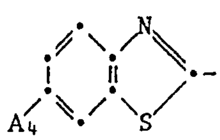 ,

entspricht, worin $A_2$ und $A_3$ unabhängig voneinander Wasserstoff, Nitro oder p-Nitrophenyl sind, und $A_4$ Wasserstoff oder Alkoxy mit 2 bis 4 Kohlenstoffatomen ist.

**13.** Photographisches Aufzeichnungsmaterial nach Anspruch 12, dadurch gekennzeichnet, dass im Farbstoff der Formel (1) $R_1$ Wasserstoff, Alkyl mit 5 bis 10 Kohlenstoffatomen, $-NHCOL_1$, worin $L_1$ Alkyl mit 1 bis 20 Kohlenstoffatomen ist, $R_6$ Wasserstoff oder $-NR_2R_3$, worin $R_2$ und $R_3$ unabhängig voneinander Wasserstoff, Alkyl mit 1 bis 4 Kohlenstoffatomen, $-(CH_2)_pNHCOL_3$, worin $L_3$ Alkyl mit 1 bis 4 Kohlenstoffatomen und p 1, 2 oder 3 ist, oder Benzyl sind, und $R_4$ Wasserstoff, Methoxy oder $-(OCH_2CH_2)_2OCH_3$ ist.

**14.** Photographisches Aufzeichnungsmaterial nach Anspruch 3, dadurch gekennzeichnet, dass der im Farbstoff der Formel (1) durch D gebildete Ring der Formel

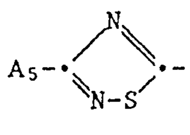

oder

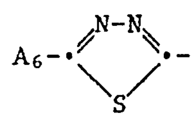

,

entspricht, worin $A_5$ Phenyl, Chlor, Trichlormethan oder Benzylthio und $A_5$ Phenyl oder Alkyl mit 1 bis 12 Kohlenstoffatomen ist.

**15.** Photographisches Aufzeichnungsmaterial nach Anspruch 14, dadurch gekennzeichnet, dass im Farbstoff der Formel (1) $R_1$ Wasserstoff, $-NHCOL_1$, worin $L_1$ Alkyl mit 1 bis 20 Kohlenstoffatomen ist, und $R_6$ $-NR_2R_3$, worin $R_2$ und $R_3$ unabhängig voneinander Wasserstoff, Alkyl mit 1 bis 6 Kohlenstoffatomen oder mit Methoxy, Hydroxyl oder Phenyl substituiertes Alkyl mit 1 bis 4 Kohlenstoffatomen sind, und $R_4$ Wasserstoff oder Methoxy ist.

**16.** Verfahren zur Herstellung photographischer Bilder nach dem Silberfarbbleichverfahren, dadurch gekennzeichnet, dass man ein photographisches Aufzeichnungsmaterial nach Anspruch 1 verwendet.

**17.** Verbindungen der Formel

(1)

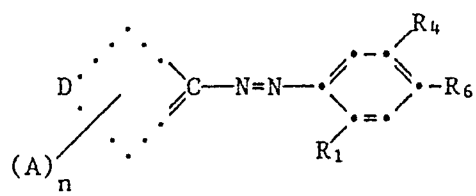

worin D die zur Vervollständigung des Restes der Formel

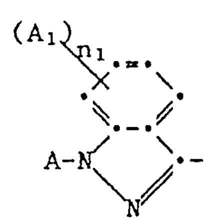

notwendigen Atome darstellt, worin A und $A_1$ unabhängig voneinander Wasserstoff, Alkyl mit 1 bis 4 Kohlenstoffatomen oder Nitro substituiertes Phenyl sind,
$R_1$ Wasserstoff, $-NHCOL_1$, worin $L_1$ Alkyl mit 6 bis 12 Kohlenstoffatomen ist,
$R_6$ $-NR_2R_3$, worin $R_2$ und $R_3$ unabhängig voneinander Alkyl mit 1 bis 4 Kohlenstoffatomen oder phenylsubstituiertes Alkyl mit 1 bis 4 Kohlenstoffatomen sind, und
$R_4$ Wasserstoff oder Alkyl mit 1 bis 4 Kohlenstoffatomen ist, n 0, 1, 2 oder 3 und $n_1$ 0, 1 oder 2 ist.

**18.** Verbindungen nach Anspruch 17, dadurch gekennzeichnet, dass A und $A_1$ unabhängig voneinander Wasserstoff oder Methyl sind, $R_1$ Wasserstoff oder $-NHCOL_1$, worin $L_1$ Alkyl mit 6 bis 9 Kohlenstoffatomen ist, $R_6$ $-NR_2R_3$, worin $R_2$ und $R_3$ unabhängig voneinander Methyl, Aethyl, Benzyl oder Phenyläthyl sind, und $R_4$ Wasserstoff oder Methyl ist.

**19.** Verbindungen der Formel

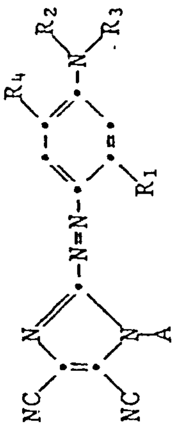

| A | $R_1$ | $R_4$ | $R_2$ | $R_3$ |
|---|---|---|---|---|
| $C_2H_5-$ | $-NHCOCH_3$ | H | $n-C_6H_{13}$ | $n-C_6H_{13}$ |
| $CH_3-$ | $-NHCO(CH_2)_{12}CH_3$ | H | $C_2H_5$ | $C_2H_5$ |
| $H_5C_2OCH_2CH_2-$ | $-NHCOCH_2CH(CH_3)_2$ | H | $C_2H_5$ | $C_2H_5$ |
| 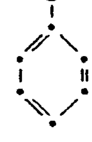 $-OCH_2CH_2-$ | $-NHCOCH_2CH(CH_3)_2$ | H | $C_2H_5$ | $C_2H_5$ |
| 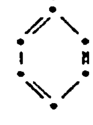 $-OCH_2CH_2-$ | $-NHCOCH_2CH(CH_3)_2$ | $OCH_3$ | H | $CH(CH_3)CH_2OCH_3$ |
| $H_5C_2OCH_2CH_2-$ | $-NHCOCH_2CH(CH_3)_2$ | $OCH_3$ | H | $CH(CH_3)CH_2OCH_3$ |
| $H_5C_2OOCCH_2-$ | $-NHCOCH_2CH(CH_3)_2$ | $OCH_3$ | H | $CH(CH_3)CH_2OCH_3$ |
| $CH_3COCH_2-$ | $-NHCOCON-$ $CH_3$ 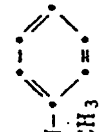 | $OCH_3$ | H | $CH(CH_3)CH_2OCH_3$ |
| 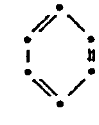 $-CH_2OOCCH_2-$ | $-NHCOCON-$ $CH_3$ 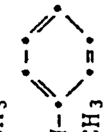 | $OCH_3$ | H | $CH(CH_3)CH_2OCH_3$ |

| A | $R_1$ | $R_4$ | $R_2$ | $R_3$ |
|---|---|---|---|---|
| $NC-CH_2-$ | $-NHCOCH_2CH(CH_3)_2$ | $OCH_3$ | H | $CH(CH_3)CH_2OCH_3$ |
| $(CH_3)_3CCOOCH_2-$ | $-NHCOCH_2CH(CH_3)_2$ | $OCH_3$ | H | $CH(CH_3)CH_2OCH_3$ |
| 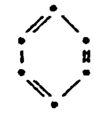 $-COCH_2-$ | $-NHCOCH_2CH(CH_3)_2$ | $OCH_3$ | H | $CH(CH_3)CH_2OCH_3$ |
| $CH_3COCH_2-$ | $-NHCOCH_2CH(CH_3)_2$ | $OCH_3$ | H | $CH(CH_3)CH_2OCH_3$ |
| 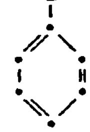 $-CH_2OOCCH_2-$ | $-NHCOCH_2CH(CH_3)_2$ | $OCH_3$ | H | $CH(CH_3)CH_2OCH_3$ |
| 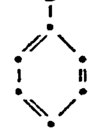 $-CH_2OOCCH_2-$ | $-NHCOCH_3$ | $OCH_3$ | H | $-CH_2-$ 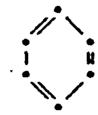 |
| $H_5C_2OOCCH_2-$ | $-NHCOCH_3$ | $OCH_3$ | H | $-CH_2-$ 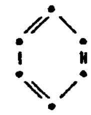 |
| $H_5C_2OCH_2CH_2-$ | $-NHCOCH_2CH(CH_3)_2$ | $OCH_3$ | H | $CH(CH_3)CH_2OCH_3$ |
| $H_5C_2OCH_2CH_2-$ | $-NHCOCH_3$ | $OCH_3$ | H | $CH(CH_3)CH_2OCH_3$ |
| 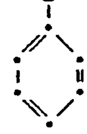 $-OCH_2CH_2-$ | $-NHCOCH_3$ | $OCH_3$ | H | $CH(CH_3)CH_2OCH_3$ |
| H | $-NHCOCH_2CH(CH_3)_2$ | $OCH_3$ | $C_2H_5$ | $C_2H_5$ |

**20.** Verfahren zur Herstellung der Verbindungen nach Anspruch 17, dadurch gekennzeichnet, dass man ein Amin der Formel

(2) 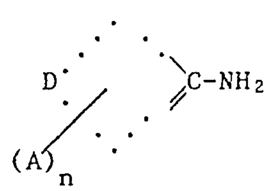 ,

worin D, A, und n die in Anspruch 17 angegebene Bedeutung haben, diazotiert oder nitrosiert und mit einer Verbindung der Formel

(3)

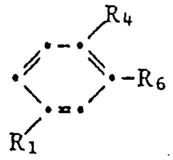

worin $R_1$, $R_6$ und $R_4$ die in Anspruch 17 angegebenen Bedeutungen haben, in wässrigem Medium kuppelt.

**21.** Verwendung der Verbindungen nach Anspruch 17 als Bildfarbstoffe in photographischen Aufzeichnungsmaterialien für das Silberfarbbleichverfahren.

## Claims

**1.** A photographic recording material for the silver dye bleach process, which material comprises in at least one silver halide emulsion layer, or in a colloidal layer adjacent to that layer or layers, at least one oil-soluble dye of the formula

(1)

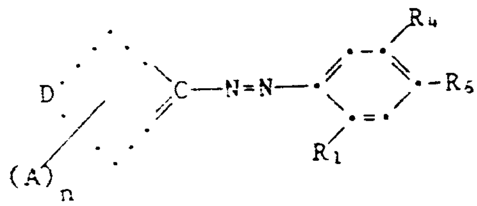

wherein
D is the group of atoms necessary to complete a 5-membered ring which contains at least one nitrogen atom and is optionally benzoanellated,
A is hydrogen, $C_1$-$C_{12}$alkyl, $C_1$-$C_4$alkyl which is substituted by alkoxy, phenoxy, acyl, acyloxy, carbalkoxy, cyano or by halogen, or is $C_1$-$C_4$alkoxy, phenyl or phenyl which is substituted by an electronegative group, or is $C_1$-$C_4$alkylthio, phenyl-substituted $C_1$-$C_4$alkylthio, cyano, nitro or halogen, and n is 0, 1, 2 or 3,
$R_1$ is hydrogen, $C_1$-$C_4$alkyl, hydroxy or -NHCOL$_1$ wherein
$L_1$ is $C_1$-$C_{20}$alkyl or substituted carbamoyl,
$R_6$ is hydrogen or -$NR_2R_3$, wherein each of $R_2$ and $R_3$ independently of the other is hydrogen, $C_1$-$C_8$alkyl, or $C_1$-$C_4$alkyl which is substituted by acylamino, phenyl, alkoxy or by hydroxyl, and
$R_4$ is hydrogen, $C_1$-$C_4$alkoxy or -$(OCH_2CH_2)_m$-$OCH_3$ wherein m is 1 or 2.

**2.** A photographic recording material according to claim 1, wherein the ring formed by D in the dye of formula (1) contains at least one further hetero atom.

**3.** A photographic recording material according to claim 2, wherein the ring formed by D in the dye of formula (1) is a pyrazolyl, benzopyrazolyl, imidazolyl, triazolyl, thiazolyl, benzothiazolyl, thiadiazolyl or isothiadiazolyl radical.

**4.** A photographic recording material according to claim 3, wherein the ring formed by D in the dye of formula (1) is a 1-phenyl-3-methylpyrazolyl radical.

**5.** A photographic recording material according to claim 4, wherein in the dye of formula (1) $R_1$ is hydrogen or $C_1$-$C_4$alkyl and $R_6$ is -$NR_2R_3$ wherein each of $R_2$ and $R_3$ independently of the other is $C_1$-$C_4$alkyl or $(CH_2)_p$NHCOL$_3$, wherein $L_3$ is $C_4$-$C_{12}$alkyl and p is 1, 2, 3 or 4, and $R_4$ is hydrogen.

**6.** A photographic recording material according to claim 3, wherein the ring formed by D in the dye of formula (1) is a benzopyrazolyl or 1-methylbenzopyrazolyl radical.

**7.** A photographic recording material according to claim 6, wherein in the dye of formula (1) $R_1$ is hydrogen or $-NHCOL_1$ wherein $L_1$ is $C_6$-$C_{12}$alkyl, $R_6$ is $-NR_2R_3$ wherein each of $R_2$ and $R_3$ independently of the other is $C_1$-$C_4$alkyl or phenyl-substituted $C_1$-$C_4$alkyl, and $R_4$ is hydrogen.

**8.** A photographic recording material according to claim 3, wherein the ring formed by D in the dye of formula (1) has the formula

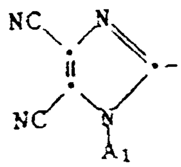

wherein $A_1$ is hydrogen, $C_1$-$C_4$alkyl or $C_1$-$C_4$alkyl which is substituted by $C_1$-$C_4$alkoxy, phenoxy, $C_2$-$C_8$carbalkoxy, acetyl, benzoyl or by cyano.

**9.** A photographic recording material according to claim 8, wherein in the dye of formula (1) $R_1$ is $-NHCOL_1$ wherein $L_1$ is $C_1$-$C_{14}$alkyl or N-methyl-N-phenylcarbamoyl, $R_6$ is $-NR_2R_3$ wherein each of $R_2$ and $R_3$ independently of the other is hydrogen, $C_1$-$C_8$alkyl, or phenyl- or methoxy-substituted $C_1$-$C_4$alkyl, and $R_4$ is hydrogen or methoxy.

**10.** A photographic recording material according to claim 3, wherein the ring formed by D in the dye of formula (1) is a 1,2,4-triazolyl radical which may be substituted in the 1-position by a decyl radical.

**11.** A photographic recording material according to claim 10, wherein in the dye of formula (1) $R_1$ and $R_4$ are hydrogen and $R_6$ is $-NR_2R_3$, wherein each of $R_2$ and $R_3$ independently of the other is $C_1$-$C_4$alkyl or phenyl-substituted $C_1$-$C_4$alkyl.

**12.** A photographic recording material according to claim 3, wherein the ring formed by D in the dye of formula (1) has the formula

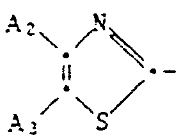 , 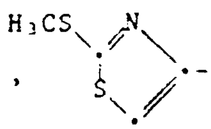 or 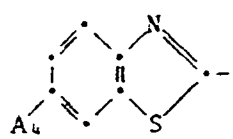 ,

wherein each of $A_2$ and $A_3$ independently of the other is hydrogen, nitro or p-nitrophenyl, and $A_4$ is hydrogen or $C_2$-$C_4$alkoxy.

**13.** A photographic recording material according to claim 12, wherein in the dye of formula (1) $R_1$ is hydrogen, $C_5$-$C_{10}$alkyl or $-NHCOL_1$ wherein $L_1$ is $C_1$-$C_{20}$alkyl, $R_6$ is hydrogen or $-NR_2R_3$, wherein each of $R_2$ and $R_3$ independently of the other is hydrogen, $C_1$-$C_4$alkyl, $-(CH_2)_pNHCOL_3$ wherein $L_3$ is $C_1$-$C_4$alkyl and p is 1, 2 or 3, or benzyl, and $R_4$ is hydrogen, methoxy or $-(OCH_2CH_2)_2OCH_3$.

**14.** A photographic recording material according to claim 3, wherein the ring formed by D in the dye of formula (1) has the formula

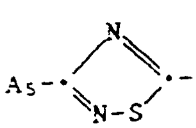 or 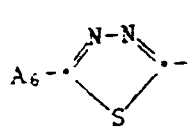 ,

wherein $A_5$ is phenyl, chlorine, trichloromethane or benzylthio, and $A_5$ is phenyl or $C_1$-$C_{12}$alkyl.

**15.** A photographic recording material according to claim 14, wherein in the dye of formula (1) $R_1$ is hydrogen or $-NHCOL_1$, wherein $L_1$ is $C_1$-$C_{20}$alkyl, $R_6$ is $-NR_2R_3$, wherein each of $R_2$ and $R_3$ independently of the other is hydrogen, $C_1$-$C_6$alkyl, or $C_1$-$C_4$alkyl which is substituted by methoxy, hydroxyl or by phenyl, and $R_4$ is hydrogen or methoxy.

**16.** A process for the production of photographic images by the silver dye bleach process, which comprises the use of a photographic recording material according to claim 1.

**17.** A compound of the formula

(1) 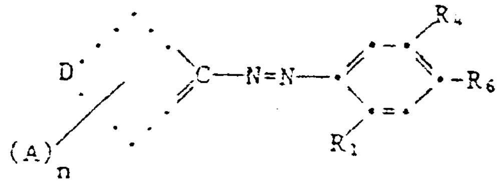

wherein D is the group of atoms necessary to complete the radical of the formula

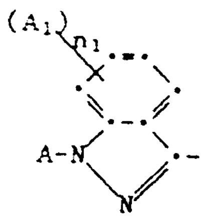

wherein each of A and $A_1$ independently of the other is hydrogen, $C_1$-$C_4$alkyl, or nitro-substituted phenyl, $R_1$ is hydrogen or $-NHCOL_1$, wherein $L_1$ is $C_6$-$C_{12}$alkyl, $R_6$ is $-NR_2R_3$ wherein each of $R_2$ and $R_3$ independently of the other is $C_1$-$C_4$alkyl or phenyl-substituted $C_1$-$C_4$alkyl, and $R_4$ is hydrogen or $C_1$-$C_4$alkyl, and n is 0, 1, 2 or 3 and $n_1$ is 0, 1 or 2.

**18.** A compound according to claim 17, wherein each of A and $A_1$ independently of the other is hydrogen or methyl, $R_1$ is hydrogen or $-NHCOL_1$, wherein $L_1$ is $C_6$-$C_9$alkyl, $R_6$ is $-NR_2R_3$, wherein each of $R_2$ and $R_3$ independently of the other is methyl, ethyl, benzyl or phenylethyl, and $R_4$ is hydrogen or methyl.

**19.** A compound according to any one of the formulae

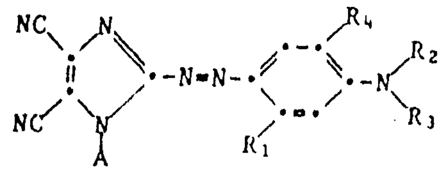

| A | $R_1$ | $R_4$ | $R_2$ | $R_3$ |
|---|---|---|---|---|
| $C_2H_5-$ | $-NHCOCH_3$ | H | $n-C_6H_{13}$ | $n-C_6H_{13}$ |
| $CH_3-$ | $-NHCO(CH_2)_{12}CH_3$ | H | $C_2H_5$ | $C_2H_5$ |
| $H_5C_2OCH_2CH_2-$ | $-NHCOCH_2CH(CH_3)_2$ | H | $C_2H_5$ | $C_2H_5$ |
| 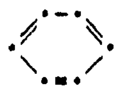 $-OCH_2CH_2-$ | $-NHCOCH_2CH(CH_3)_2$ | H | $C_2H_5$ | $C_2H_5$ |
| 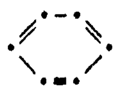 $-OCH_2CH_2-$ | $-NHCOCH_2CH(CH_3)_2$ | $OCH_3$ | H | $CH(CH_3)CH_2OCH_3$ |
| $H_5C_2OCH_2CH_2-$ | $-NHCOCH_2CH(CH_3)_2$ | $OCH_3$ | H | $CH(CH_3)CH_2OCH_3$ |
| $H_5C_2OOCCH_2-$ | $-NHCOCH_2CH(CH_3)_2$ | $OCH_3$ | H | $CH(CH_3)CH_2OCH_3$ |
| $CH_3COCH_2-$ | $-NHCOCON-$ $CH_3$ 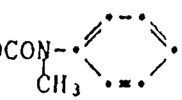 | $OCH_3$ | H | $CH(CH_3)CH_2OCH_3$ |
| 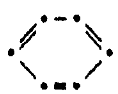 $-CH_2OOCCH_2-$ | $-NHCOCON-$ $CH_3$ 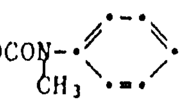 | $OCH_3$ | H | $CH(CH_3)CH_2OCH_3$ |

| A | $R_1$ | $R_4$ | $R_2$ | $R_3$ |
|---|---|---|---|---|
| $NC-CH_2-$ | $-NHCOCH_2CH(CH_3)_2$ | $OCH_3$ | H | $CH(CH_3)CH_2OCH_3$ |
| $(CH_3)_3CCOOCH_2-$ | $-NHCOCH_2CH(CH_3)_2$ | $OCH_3$ | H | $CH(CH_3)CH_2OCH_3$ |
| 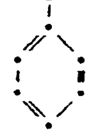 $-COCH_2-$ | $-NHCOCH_2CH(CH_3)_2$ | $OCH_3$ | H | $CH(CH_3)CH_2OCH_3$ |
| $CH_3COCH_2-$ | $-NHCOCH_2CH(CH_3)_2$ | $OCH_3$ | H | $CH(CH_3)CH_2OCH_3$ |
| 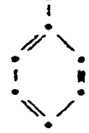 $-CH_2OOCCH_2-$ | $-NHCOCH_2CH(CH_3)_2$ | $OCH_3$ | H | $CH(CH_3)CH_2OCH_3$ |
| 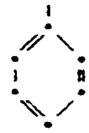 $-CH_2OOCCH_2-$ | $-NHCOCH_3$ | $OCH_3$ | H | $-CH_2-$ 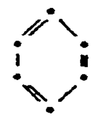 |
| $H_5C_2OOCCH_2-$ | $-NHCOCH_3$ | $OCH_3$ | H | $-CH_2-$ 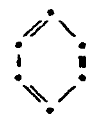 |
| $H_5C_2OCH_2CH_2-$ | $-NHCOCH_2CH(CH_3)_2$ | $OCH_3$ | H | $CH(CH_3)CH_2OCH_3$ |
| $H_5C_2OCH_2CH_2-$ | $-NHCOCH_3$ | $OCH_3$ | H | $CH(CH_3)CH_2OCH_3$ |
| 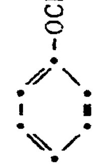 $-OCH_2CH_2-$ | $-NHCOCH_3$ | $OCH_3$ | H | $CH(CH_3)CH_2OCH_3$ |
| H | $-NHCOCH_2CH(CH_3)_2$ | $OCH_3$ | $C_2H_5$ | $C_2H_5$ |

**20.** A process for the preparation of a compound as claimed in claim 17, which comprises diazotising or nitrosating an amine of formula

(2) 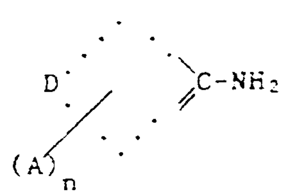 ,

wherein D, A and n are as defined in claim 17, and coupling with a compound of formula

(3)

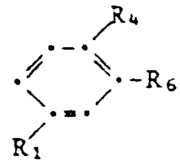

wherein $R_1$, $R_6$ and $R_4$ are as defined in claim 17, in aqueous medium.

**21.** Use of a compound as claimed in claim 17 as an image dye in a photographic recording material for the silver dye bleach process.

**Revendications**

**1.** Matériau d'enregistrement photographique pour le procédé de blanchiment des couleurs et de l'argent, qui contient, dans au moins une couche d'émulsion d'halogénure d'argent ou dans une couche colloïdale adjacente à cette couche ou à ces couches, au moins un colorant oléosoluble de formule

(1)

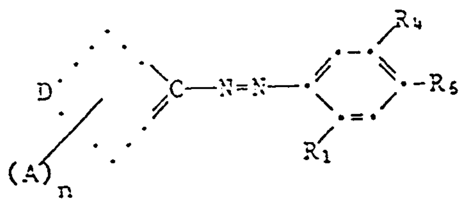

dans laquelle
D représente les atomes nécessaires pour compléter un cycle à 5 chaînons, comportant au moins un atome d'azote et éventuellement condensé à un noyau benzénique,
A représente un atome d'hydrogène ou d'halogène ou un groupe cyano, nitro, alkyle comportant de 1 à 12 atomes de carbone, alkyle comportant de 1 à 4 atomes de carbone et substitué par alcoxy, phénoxy, acyle, acyloxy, carbalcoxy, cyano ou halogéno, alcoxy comportant de 1 à 4 atomes de carbone, phényle, phényle portant un substituant électronégatif, alkylthio comportant de 1 à 4 atomes de carbone, alkylthio comportant de 1 à 4 atomes de carbone et substitué par phényle,
n vaut 0, 1, 2 ou 3,
$R_1$ représente un atome d'hydrogène ou un groupe alkyle comportant de 1 à 4 atomes de carbone, hydroxyle ou $-NHCOL_1$, $L_1$ représentant un groupe alkyle comportant de 1 à 20 atomes de carbone ou un groupe carbamoyle substitué,
$R_6$ représente un atome d'hydrogène ou un groupe $-NR_2R_3$, $R_2$ et $R_3$ représentant, indépendamment l'un de l'autre, des atomes d'hydrogène, des groupes alkyle comportant de 1 à 8 atomes de carbone ou des groupes alkyle comportant de 1 à 4 atomes de carbone et substitués par acylamino, phényle, alcoxy ou hydroxyle, et
$R_4$ représente un atome d'hydrogène, un groupe alcoxy comportant de 1 à 4 atomes de carbone ou un groupe $-(OCH_2CH_2)_m-OCH_3$, m valant 1 ou 2.

**2.** Matériau d'enregistrement photographique selon la revendication 1, **caractérisé** en ce que, dans le colorant de formule (1), le cycle formé par D contient au moins un autre hétéroatome.

**3.** Matériau d'enregistrement photographique selon la revendication 2, **caractérisé** en ce que, dans le colorant de formule (1), le cycle formé par D est un reste pyrazolyle, benzopyrazolyle, imidazolyle, triazolyle, thiazolyle, benzothiazolyle, thiadiazolyle ou isothiadiazolyle.

**4.** Matériau d'enregistrement photographique selon la revendication 3, **caractérisé** en ce que, dans le colorant de formule (1), le cycle formé par D est un reste 1-phényl-3-méthyl-pyrazolyle.

**5.** Matériau d'enregistrement photographique selon la revendication 4, **caractérisé** en ce que, dans le colorant de formule (1), $R_1$ représente un atome d'hydrogène ou un groupe alkyle comportant de 1 à 4

atomes de carbone, et $R_6$ représente $-NR_2R_3$, où $R_2$ et $R_3$ représentent chacun, indépendamment l'un de l'autre, un groupe alkyle comportant de 1 à 4 atomes de carbone ou $-(CH_2)_pNHCOL_3$, $L_3$ représentant un groupe alkyle comportant de 4 à 12 atomes de carbone et p valant 1, 2, 3 ou 4, et $R_4$ représente un atome d'hydrogène.

6. Matériau d'enregistrement photographique selon la revendication 3, **caractérisé** en ce que, dans le colorant de formule (1), le cycle formé par D est un reste benzopyrazolyle ou 1-méthyl-benzopyrazolyle.

7. Matériau d'enregistrement photographique selon la revendication 6, **caractérisé** en ce que, dans le colorant de formule (1), $R_1$ représente un atome d'hydrogène ou un groupe $-NHCOL_1$, $L_1$ représentant un groupe alkyle comportant de 6 à 12 atomes de carbone, $R_6$ représente $-NR_2R_3$ où $R_2$ et $R_3$, indépendamment l'un de l'autre, représentent chacun un groupe alkyle comportant de 1 à 4 atomes de carbone ou un groupe alkyle comportant de 1 à 4 atomes de carbone et substitué par phényle, et $R_4$ représente un atome d'hydrogène.

8. Matériau d'enregistrement photographique selon la revendication 3, **caractérisé** en ce que, dans le colorant de formule (1), le noyau formé par D correspond à la formule

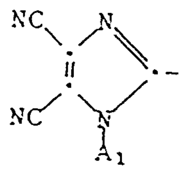

dans laquelle $A_1$ représente un atome d'hydrogène, un groupe alkyle comportant de 1 à 4 atomes de carbone ou un groupe alkyle comportant de 1 à 4 atomes de carbone et substitué par alcoxy comportant de 1 à 4 atomes de carbone, phénoxy, carbalcoxy comportant de 2 à 8 atomes de carbone, acétyle, benzoyle ou cyano.

9. Matériau d'enregistrement photographique selon la revendication 8, **caractérisé** en ce que, dans le colorant de formule (1), $R_1$ représente $-NHCOL_1$, $L_1$ représentant un groupe alkyle comportant de 1 à 14 atomes de carbone ou un groupe N-méthyl-N-phénylcarbamoyle, $R_6$ représente $-NR_2R_3$, $R_2$ et $R_3$ représentant indépendamment l'un de l'autre un atome d'hydrogène ou un groupe alkyle comportant de 1 à 8 atomes de carbone ou un groupe alkyle comportant de 1 à 4 atomes de carbone et substitué par phényle ou méthoxy, et $R_4$ représente un atome d'hydrogène ou un groupe méthoxy.

10. Matériau d'enregistrement photographique selon la revendication 3, **caractérisé** en ce que, dans le colorant de formule (1), le cycle formé par D est un reste 1,2,4-triazolyle, qui peut être substitué en position 1 par un groupe décyle.

11. Matériau d'enregistrement photographique selon la revendication 10, **caractérisé** en ce que, dans le colorant de formule (1), $R_1$ et $R_4$ représentent des atomes d'hydrogène et $R_6$ représente $-NR_2R_3$, $R_2$ et $R_3$ représentant chacun, indépendamment l'un de l'autre, un groupe alkyle comportant de 1 à 4 atomes de carbone ou un groupe alkyle comportant de 1 à 4 atomes de carbone et substitué par phényle.

12. Matériau d'enregistrement photographique selon la revendication 3, **caractérisé** en ce que, dans le colorant de formule (1), le cycle formé par D correspond à la formule

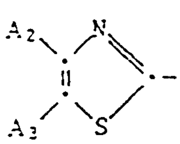 , 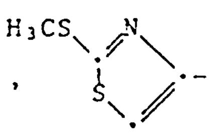 ou 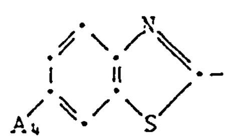 ,

dans lesquelles $A_2$ et $A_3$ représentent chacun, indépendamment l'un de l'autre, un atome d'hydrogène

ou un groupe nitro ou p-nitrophényle, et $A_4$ représente un atome d'hydrogène ou un groupe alcoxy comportant de 2 à 4 atomes de carbone.

**13.** Matériau d'enregistrement photographique selon la revendication 12, **caractérisé** en ce que, dans le colorant de formule (1), $R_1$ représente un atome d'hydrogène, ou un groupe alkyle comportant de 5 à 10 atomes de carbone, ou $-NHCOL_1$, $L_1$ représentant un groupe alkyle comportant de 1 à 20 atomes de carbone, $R_6$ représente un atome d'hydrogène ou $-NR_2R_3$, $R_2$ et $R_3$ représentant chacun, indépendamment l'un de l'autre, un atome d'hydrogène ou un groupe alkyle comportant de 1 à 4 atomes de carbone, benzyle ou $-(CH_2)_pNHCOL_3$, $L_3$ représentant un groupe alkyle comportant de 1 à 4 atomes de carbone et p valant 1, 2 ou 3, et $R_4$ représente un atome d'hydrogène ou un groupe méthoxy ou $-(OCH_2CH_2)_2OCH_3$.

**14.** Matériau d'enregistrement photographique selon la revendication 3, **caractérisé** en ce que, dans le colorant de formule (1), le cycle formé par D correspond à la formule

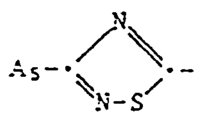

ou

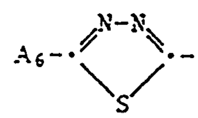

,

dans lesquelles $A_5$ représente un atome de chlore ou un groupe phényle, trichlorométhyle ou benzylthio et $A_5$ représente un groupe phényle ou alkyle comportant de 1 à 12 atomes de carbone.

**15.** Matériau d'enregistrement photographique selon la revendication 14, **caractérisé** en ce que, dans le colorant de formule (1), $R_1$ représente un atome d'hydrogène ou un groupe $-NHCOL_1$, $L_1$ représentant un groupe alkyle comportant de 1 à 20 atomes de carbone, et $R_6$ représente $-NR_2R_3$, $R_2$ et $R_3$ représentant chacun, indépendamment l'un de l'autre, un atome d'hydrogène ou un groupe alkyle comportant de 1 à 6 atomes de carbone ou un groupe alkyle comportant de 1 à 4 atomes de carbone et substitué par méthoxy, hydroxy ou phényle, et $R_4$ représente un atome d'hydrogène ou un groupe méthoxy.

**16.** Procédé pour la fabrication d'images photographiques selon le procédé de blanchiment des couleurs et de l'argent, **caractérisé** en ce que l'on utilise un matériau d'enregistrement photographique conforme à la revendication 1.

**17.** Composés de formule

(1)

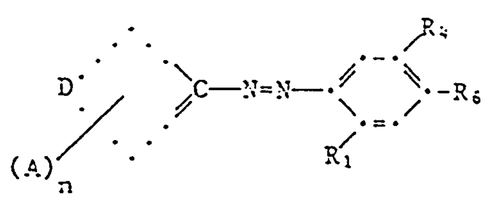

dans laquelle D représente les atomes nécessaires pour compléter le reste de formule

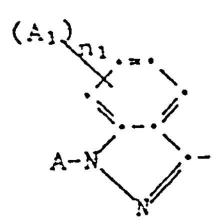

dans laquelle A et $A_1$ représentent, indépendamment l'un de l'autre, un atome d'hydrogène, un groupe alkyle comportant de 1 à 4 atomes de carbone ou un groupe phényle substitué par nitro,

$R_1$ représente un atome d'hydrogène ou un groupe -NHCOL$_1$, $L_1$ représentant un groupe alkyle comportant de 6 à 12 atomes de carbone,
$R_6$ représente -$NR_2R_3$, $R_2$ et $R_3$ représentant indépendamment l'un de l'autre un groupe alkyle comportant de 1 à 4 atomes de carbone ou un groupe alkyle comportant de 1 à 4 atomes de carbone à substituant(s) phényle, et
$R_4$ représente un atome d'hydrogène ou un groupe alkyle comportant de 1 à 4 atomes de carbone,
n vaut 0, 1, 2 ou 3 et $n_1$ vaut 0, 1 ou 2.

**18.** Composés selon la revendication 17, **caractérisés** en ce que A et $A_1$, indépendamment l'un de l'autre, représentent un atome d'hydrogène ou un groupe méthyle, $R_1$ représente un atome d'hydrogène ou un groupe - NHCOL$_1$, $L_1$ représentant un groupe alkyle comportant de 6 à 9 atomes de carbone, $R_6$ représente -$NR_2R_3$, $R_2$ et $R_3$ représentant chacun, indépendamment l'un de l'autre, un groupe méthyle, éthyle, benzyle ou phénéthyle, et $R_4$ représente un atome d'hydrogène ou un groupe méthyle.

**19.** Composés de formule

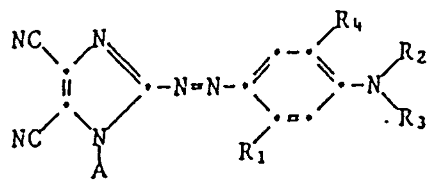

avec

**20.** Procédé de préparation de composés conformes à la revendication 17, caractérisé en ce que l'on effectue la diazotation ou la nitrosation d'une amine de formule

(2) 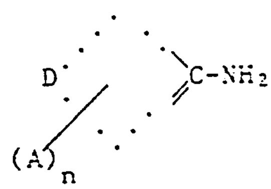

dans laquelle D, A et n ont les significations indiquées dans la revendication 17, et que l'on effectue une copulation en milieu aqueux avec un composé de formule

(3) 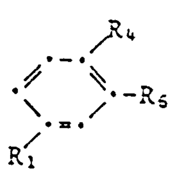

dans laquelle $R_1$, $R_6$ et $R_4$ ont les significations indiquées dans la revendication 17.

**21.** Utilisation des composés conformes à la revendication 17 comme colorants d'image dans des matériaux d'enregistrement photographique pour le procédé de blanchiment des couleurs et de l'argent.

| A | $R_1$ | $R_4$ | $R_2$ | $R_3$ |
|---|---|---|---|---|
| $C_2H_5-$ | $-NHCOCH_3$ | H | $n-C_6H_{13}$ | $n-C_6H_{13}$ |
| $CH_3-$ | $-NHCO(CH_2)_{12}CH_3$ | H | $C_2H_5$ | $C_2H_5$ |
| $H_5C_2OCH_2CH_2-$ | $-NHCOCH_2CH(CH_3)_2$ | H | $C_2H_5$ | $C_2H_5$ |
| 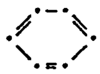 $-OCH_2CH_2-$ | $-NHCOCH_2CH(CH_3)_2$ | H | $C_2H_5$ | $C_2H_5$ |
| 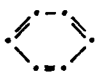 $-OCH_2CH_2-$ | $-NHCOCH_2CH(CH_3)_2$ | $OCH_3$ | H | $CH(CH_3)CH_2OCH_3$ |
| $H_5C_2OCH_2CH_2-$ | $-NHCOCH_2CH(CH_3)_2$ | $OCH_3$ | H | $CH(CH_3)CH_2OCH_3$ |
| $H_5C_2OOCCH_2-$ | $-NHCOCH_2CH(CH_3)_2$ | $OCH_3$ | H | $CH(CH_3)CH_2OCH_3$ |
| $CH_3COCH_2-$ | $-NHCOCON-$ 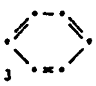 $CH_3$ | $OCH_3$ | H | $CH(CH_3)CH_2OCH_3$ |
| 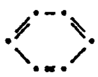 $-CH_2OOCCH_2-$ | $-NHCOCON-$ 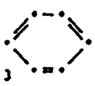 $CH_3$ | $OCH_3$ | H | $CH(CH_3)CH_2OCH_3$ |
| $NC-CH_2-$ | $-NHCOCH_2CH(CH_3)_2$ | $OCH_3$ | H | $CH(CH_3)CH_2OCH_3$ |
| $(CH_3)_3CCOOCH_2-$ | $-NHCOCH_2CH(CH_3)_2$ | $OCH_3$ | H | $CH(CH_3)CH_2OCH_3$ |
| 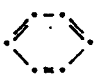 $-COCH_2-$ | $-NHCOCH_2CH(CH_3)_2$ | $OCH_3$ | H | $CH(CH_3)CH_2OCH_3$ |
| $CH_3COCH_2-$ | $-NHCOCH_2CH(CH_3)_2$ | $OCH_3$ | H | $CH(CH_3)CH_2OCH_3$ |
| 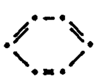 $-CH_2OOCCH_2-$ | $-NHCOCH_2CH(CH_3)_2$ | $OCH_3$ | H | $CH(CH_3)CH_2OCH_3$ |
| 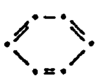 $-CH_2OOCCH_2-$ | $-NHCOCH_3$ | $OCH_3$ | H | $-CH_2-$ 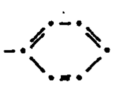 |
| $H_5C_2OOCCH_2-$ | $-NHCOCH_3$ | $OCH_3$ | H | $-CH_2-$ 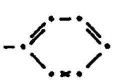 |
| $H_5C_2OCH_2CH_2-$ | $-NHCOCH_2CH(CH_3)_2$ | $OCH_3$ | H | $CH(CH_3)CH_2OCH_3$ |
| $H_5C_2OCH_2CH_2-$ | $-NHCOCH_3$ | $OCH_3$ | H | $CH(CH_3)CH_2OCH_3$ |
| 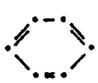 $-OCH_2CH_2-$ | $-NHCOCH_3$ | $OCH_3$ | H | $CH(CH_3)CH_2OCH_3$ |
| H | $-NHCOCH_2CH(CH_3)_2$ | $OCH_3$ | $C_2H_5$ | $C_2H_5$ |